(19) Europäisches Patentamt
European Patent Office
Office européen des brevets

(11) **EP 2 905 871 A1**

(12) **EUROPEAN PATENT APPLICATION**
published in accordance with Art. 153(4) EPC

(43) Date of publication:
**12.08.2015 Bulletin 2015/33**

(21) Application number: **12886128.3**

(22) Date of filing: **04.10.2012**

(51) Int Cl.:
*H02J 17/00* $^{(2006.01)}$     *H03H 7/40* $^{(2006.01)}$

(86) International application number:
**PCT/JP2012/075838**

(87) International publication number:
**WO 2014/054157 (10.04.2014 Gazette 2014/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Kabushiki Kaisha Toshiba**
**Minato-ku**
**Tokyo 105-8001 (JP)**

(72) Inventor: **ONIZUKA, Kohei**
**Tokyo 105-8001 (JP)**

(74) Representative: **Granleese, Rhian Jane**
**Marks & Clerk LLP**
**90 Long Acre**
**London WC2E 9RA (GB)**

(54) **CONTROL DEVICE, POWER TRANSMISSION DEVICE, POWER RECEPTION DEVICE, AND CONTROL METHOD**

(57) According to an embodiment, a control apparatus includes a controller and an estimator. The controller commands a frequency-variable signal source to perform a first frequency sweep on an input signal to a second resonator coupling with the first resonator under the first impedance condition. The frequency-variable signal source generates the input signal. The controller commands the frequency-variable signal source to perform a second frequency sweep on the input signal under the second impedance condition. The estimator detects at least one first specific frequency that provides the input signal with a maximal value or a minimal value during a period when the first frequency sweep is performed. The estimator detects at least one second specific frequency that provides the input signal with a maximal value or a minimal value during a period when the second frequency sweep is performed. The estimator estimates, based on the first specific frequency and the second specific frequency, at least one of a coupling coefficient for coupling between the first resonator and the second resonator, a first resonant frequency of the first resonator, and a second resonant frequency of the second resonator.

FIG. 1

**Description**

Technical Field

Embodiments relate to wireless power transmission.

Background Art

It is conventionally known that, in a wireless power transmission system, an input current or an input voltage to a power transmission resonator varies in accordance with a load impedance. A method has been proposed in which a coupling coefficient is estimated based on fluctuation in input current or input voltage with respect to fluctuation in the oscillation frequency of the power transmission resonator. The coupling coefficient corresponds to the degree of magnetic field coupling between an inductor included in the power transmission resonator and an inductor included in a power reception resonator.

According to the above-described technique, the coupling coefficient is estimated using equivalent circuits of a power transmission apparatus and a power reception apparatus. Hence, estimation accuracy for the coupling coefficient depends on the accuracies of various parameters (for example, the resonant frequency of the power transmission resonator, the resonant frequency of the power reception resonator, and the load impedance) for the equivalent circuits. That is, an error between a setting value and a true value for each of the parameters for the equivalent circuits is a factor that degrades the estimation accuracy for the coupling coefficient.

The resonant frequency of the power transmission resonator and the resonant frequency of the power reception resonator fluctuate due to variations in the manufacturing of capacitors and inductors included in the power transmission resonator and the power reception resonator. Moreover, the resonant frequency of the power transmission resonator and the resonant frequency of the power reception resonator also fluctuate depending on usage environments for the power transmission resonator and the power reception resonator (for example, the distance between the power transmission resonator and the power reception resonator, an obstacle present around the power transmission resonator and the power reception resonator, an ambient temperature). Thus, accurately estimating the resonant frequency of the power transmission resonator and the resonant frequency of the power reception resonator is not easy. Similarly, accurately estimating the coupling coefficient is not easy.

Citation List

Patent Literature

Patent literature 1: Jpn. PCT National Publication No. 2011-199975

Disclosure of Invention

Problem to be solved

An object of embodiments is to accurately estimate at least one of a coupling coefficient, a resonant frequency of a power transmission resonator, and a resonant frequency of a power reception resonator.

Solution to Problem

According to an embodiment, a control apparatus includes a controller and an estimator. The controller sets a first resonator condition under which a variable impedance element connected to a first resonator has a first impedance. The controller commands a frequency-variable signal source to perform a first frequency sweep on an input signal to a second resonator coupling with the first resonator under the first impedance condition. The frequency-variable signal source generates the input signal. The controller sets a second impedance condition under which the variable impedance element has a second impedance different from the first impedance. The controller commands the frequency-variable signal source to perform a second frequency sweep on the input signal under the second impedance condition. The estimator detects at least one first specific frequency that provides the input signal with a maximal value or a minimal value during a period when the first frequency sweep is performed. The estimator detects at least one second specific frequency that provides the input signal with a maximal value or a minimal value during a period when the second frequency sweep is performed. The estimator estimates, based on the first specific frequency and the second specific frequency, at least one of a coupling coefficient for coupling between the first resonator and the second resonator, a first resonant frequency of the first resonator, and a second resonant frequency of the second resonator.

Brief Description of Drawings

[FIG. 1] FIG. 1 is a diagram illustrating a wireless power transmission system according to a first embodiment.
[FIG. 2] FIG. 2 is a diagram illustrating a power transmission resonator in FIG. 1.
[FIG. 3] FIG. 3 is a diagram illustrating the power transmission resonator in FIG. 1.
[FIG. 4] FIG. 4 is a diagram illustrating a power reception resonator in FIG. 1.
[FIG. 5] FIG. 5 is a diagram illustrating the power reception resonator in FIG. 1.
[FIG. 6] FIG. 6 is a graph illustrating a characteristic of an input current observed under a first resonator condition and a first impedance condition.
[FIG. 7] FIG. 7 is a graph illustrating a characteristic of the input current observed under the first resonator condition and a second impedance condition.
[FIG. 8] FIG. 8 is a graph illustrating a characteristic of the input current observed under a second resonator condition and the first impedance condition.
[FIG. 9] FIG. 9 is a graph illustrating a characteristic of the input current observed under the second resonator condition and the second impedance condition.
[FIG. 10] FIG. 10 is a graph illustrating a characteristic of the input current observed under a third resonator condition and the first impedance condition.
[FIG. 11] FIG. 11 is a graph illustrating a characteristic of the input current observed under the third resonator condition and the second impedance condition.
[FIG. 12] FIG. 12 is a graph illustrating a characteristic of the input current observed under a fourth resonator condition and the first impedance condition.
[FIG. 13] FIG. 13 is a graph illustrating a characteristic of the input current observed under the fourth resonator condition and the second impedance condition.
[FIG. 14] FIG. 14 is a diagram illustrating an operation example of a control apparatus in FIG. 1.
[FIG. 15] FIG. 15 is a diagram illustrating an operation example of the control apparatus in FIG. 1.
[FIG. 16] FIG. 16 is a diagram illustrating a wireless power transmission system according to a second embodiment.
[FIG. 17] FIG. 17 is a diagram illustrating an inverter in FIG. 16.
[FIG. 18] FIG. 18 is a diagram illustrating an inverter in FIG. 16.
[FIG. 19] FIG. 19 is a diagram illustrating a wireless power transmission system according to a third embodiment.
[FIG. 20] FIG. 20 is a diagram illustrating a wireless power transmission system according to a fourth embodiment.
[FIG. 21] FIG. 21 is a diagram illustrating a wireless power transmission system according to a fifth embodiment.
[FIG. 22] FIG. 22 is a diagram illustrating a wireless power transmission system according to a sixth embodiment.
[FIG. 23] FIG. 23 is a diagram illustrating a wireless power transmission system according to a seventh embodiment.
[FIG. 24] FIG. 24 is a diagram illustrating a wireless power transmission system according to an eighth embodiment.
[FIG. 25] FIG. 25 is a diagram illustrating a wireless power transmission system according to a ninth embodiment.
[FIG. 26] FIG. 26 is a diagram illustrating a wireless power transmission system according to a tenth embodiment.
[FIG. 27] FIG. 27 is a diagram illustrating a wireless power transmission system according to an eleventh embodiment.
[FIG. 28] FIG. 28 is a diagram illustrating a wireless power transmission system according to a twelfth embodiment.
[FIG. 29] FIG. 29 is a diagram illustrating a wireless power transmission system according to a thirteenth embodiment.
[FIG. 30] FIG. 30 is a diagram illustrating a wireless power transmission system according to a fourteenth embodiment.
[FIG. 31] FIG. 31 is a diagram illustrating a wireless power transmission system according to a fifteenth embodiment.
[FIG. 32] FIG. 32 is a diagram illustrating a wireless power transmission system according to a sixteenth embodiment.
[FIG. 33] FIG. 33 is a diagram illustrating a wireless power transmission system according to a seventeenth embodiment.
[FIG. 34] FIG. 34 is a block diagram illustrating the control apparatus in FIG. 1.

Mode for Carrying Out the Invention

Embodiments will be described below with reference to the drawings. Elements that are identical or similar to corresponding described elements are denoted by identical or similar reference numerals, and duplicate descriptions are basically omitted.

(First Embodiment)

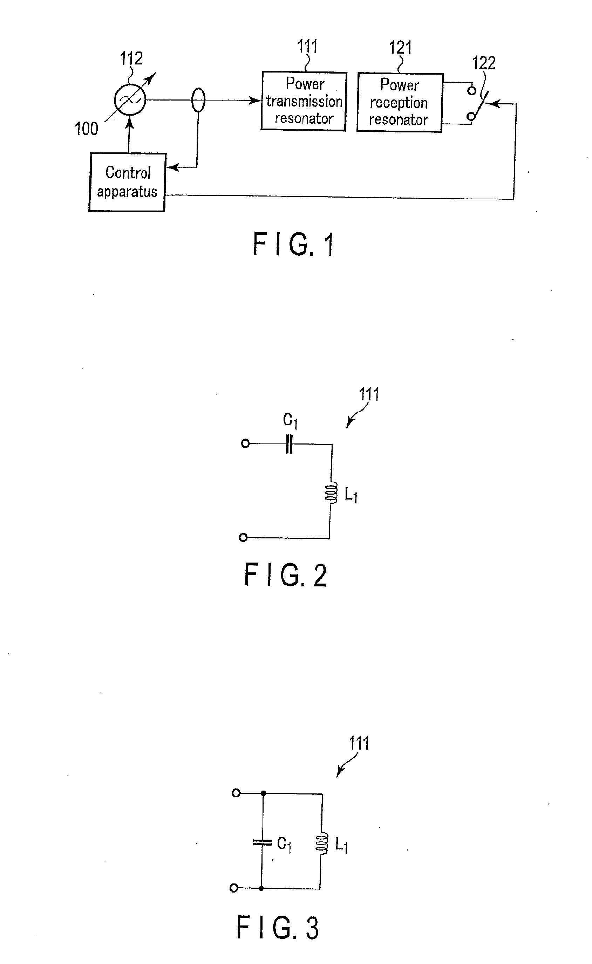

As illustrated in FIG. 1, a wireless power transmission system according to a first embodiment includes a control apparatus 100, power transmission resonator 111, a frequency-variable signal source 112, a power reception resonator 121, and a variable impedance element 122.

In the wireless power transmission system in FIG. 1, a power transmission apparatus includes at least the power transmission resonator 111. A power reception apparatus includes at least the power reception resonator 121. The control apparatus 100 may be incorporated in the power transmission apparatus or the power reception apparatus, or may be provided independently of the power transmission apparatus and the power reception apparatus.

It is hereinafter assumed that the frequency-variable signal source 112 is included in the power transmission apparatus and that the variable impedance element 122 is included in the power reception apparatus. The frequency-variable signal source 112 may also be used as a signal source for wireless power transmission or may be provided independently of such a signal source.

As described above, the frequency-variable signal source 112 may be provided independently of the signal source for wireless power transmission. Thus, the power transmission apparatus may include the variable impedance element 122 instead of the frequency-variable signal source 112. In this case, the power reception apparatus includes the frequency-variable signal source 112 instead of the variable impedance element 122. In this case, in descriptions below related to estimation of a coupling coefficient or a resonant frequency, the "power transmission resonator" and the "power reception resonator" may be interchanged as needed.

The control apparatus 100 performs various types of control in the wireless power transmission system in FIG. 1. When an element to be controlled is provided in a different apparatus (for example, the power transmission apparatus and the power reception apparatus), the control apparatus 100 may use, for example, wired communication or wireless communication for control.

Specifically, the control apparatus 100 provides a control signal to the frequency-variable signal source 112 in order to sweep the frequency of an input signal to the power transmission resonator 111 under at least two impedance conditions. Furthermore, the control apparatus 100 provides a control signal to the variable impedance element 122 in order to set the at least two impedance conditions.

Moreover, the control apparatus 100 observes at least one of the characteristics of the power transmission resonator 111 among the input current, input voltage, and input power thereof during a period when the frequency of the input signal to the power transmission resonator 111 is swept. Which of the input current, input voltage, and input power characteristics the control apparatus 100 is to be observed can be determined based on the type of the frequency-variable signal source 112.

When the frequency-variable signal source 112 is a constant power source, the control apparatus 100 may observe any of the input current, input voltage, and input power characteristics. When the frequency-variable signal source 112 is a constant voltage source, the control apparatus 100 preferably observes the input current characteristic. When the frequency-variable signal source 112 is a constant current source, the control apparatus 100 preferably observes the input voltage characteristic. For simplification, it is hereinafter assumed that the frequency-variable signal source 112 is a constant voltage source and that the control apparatus 100 observes the input current characteristic.

As described below, the control apparatus 100 detects a plurality of specific frequencies in the observed input current characteristic. As described below, the control apparatus 100 estimates a coupling coefficient k, a resonant frequency $f_1$ of the power transmission resonator 111, and a resonant frequency $f_2$ of the power reception resonator 121 based on the detected plurality of specific frequencies.

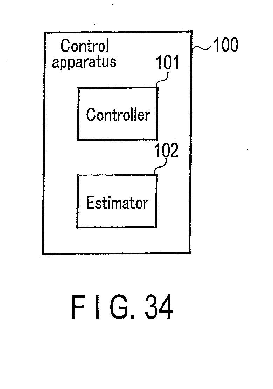

Functional division in the control apparatus 100 may be as illustrated in FIG. 34. The control apparatus 100 in FIG. 34 includes a controller 101 and an estimator 102. The controller 101 has a function related to control operations for the other elements. Specifically, the controller 101 sets an impedance condition and gives an instruction to sweep the frequency of the input signal to the power transmission resonator 111. The estimator 102 has a function related to estimation of the coupling coefficient, the resonant frequency of the power transmission resonator 111, and the resonant frequency of the power reception resonator 121. Specifically, the estimator 102 detects a plurality of specific frequencies in the observed input current characteristic and performs estimation based on the detected plurality of specific frequencies. FIG. 34 is not intended to limit the functional division in the control apparatus 100. The function of the control apparatus 100 may be subdivided so as to be implemented by a plurality of dedicated circuits or may be aggregated in one general-purpose processor (for example, a CPU).

The power transmission resonator 111 may be a series resonant circuit illustrated in FIG. 2 or a parallel resonant circuit illustrated in FIG. 3. The power transmission resonator 111 includes an inductor with an inductance = $L_1$ and a capacitor with a capacitance = $C_1$. The inductance $L_1$ and the capacitance $C_1$ have an effect on the resonant frequency $f_1$ of the power transmission resonator 111. Hence, in general, the inductor and the capacitor are designed so as to obtain the desired resonant frequency $f_1$. However, the inductance $L_1$ and the capacitance $C_1$ may deviate with respect to design values due to manufacturing variation of the inductor and the capacitor or fluctuation in usage environment.

The frequency-variable signal source 112 generates an input signal to the power transmission resonator 111. The input signal may be used exclusively to estimate the coupling coefficient k, the resonant frequency $f_1$, and the resonant frequency $f_2$ or further used for wireless power transmission. The frequency-variable signal source 112 sweeps the frequency of the input signal to the power transmission resonator 111 in accordance with the control signal from the control apparatus 100.

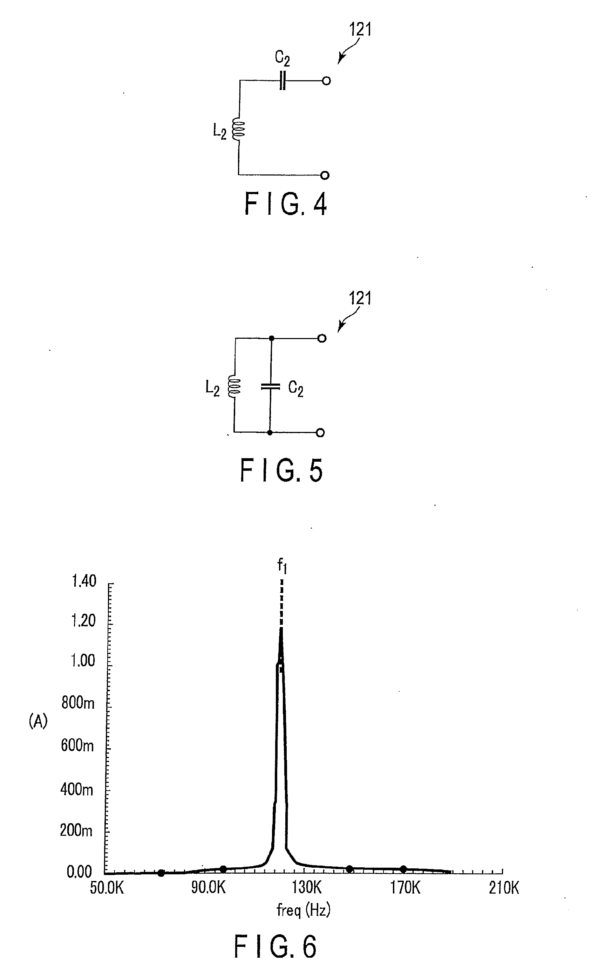

The power reception resonator 121 may be a series resonant circuit illustrated in FIG. 4 or a parallel resonant circuit illustrated in FIG. 5. The power reception resonator 121 includes an inductor with an inductance = $L_2$ and a capacitor with a capacitance = $C_2$. The inductance $L_2$ and the capacitance $C_2$ have an effect on the resonant frequency $f_2$ of the power reception resonator 121. Hence, in general, the inductor and the capacitor are designed so as to obtain the desired resonant frequency $f_2$. However, the inductance $L_2$ and the capacitance $C_2$ may deviate with respect to design values due to manufacturing variation of the inductor and the capacitor or fluctuation in usage environment.

The variable impedance element 122 can change the impedance between at least two values in accordance with a control signal from the control apparatus 100. Specifically, the impedance of the variable impedance element 122 is sufficiently high under a first impedance condition and is sufficiently low under a second impedance condition. Preferably, the variable impedance element 122 is in an open-circuit state under the first impedance condition and is in a short-circuit state under the second impedance condition. For example, when the variable impedance element 122 is a switch element, the variable impedance element 122 is in an OFF state under the first impedance condition and is in an ON state under the second impedance condition.

The following will be described below: an operation in which the control apparatus 100 detects a plurality of specific frequencies in the input current characteristic of the power transmission resonator 111, and an operation in which the control apparatus 100 estimates the coupling coefficient k, the resonant frequency $f_1$, and the resonant frequency $f_2$ based on the detected plurality of specific frequencies.

In the description below, the resonant frequency is derived in the form of angular frequency [rad/s] for convenience. The relation between a frequency f* [Hz] and an angular frequency $\omega_*$ [rad/s] is as depicted in Equation (1) below. * is an index for identifying the frequency $f_*$ and the angular frequency $\omega_*$. In the description below, "1", "2", "A", "B", "C", and the like are used as the index *.

$$\omega_* = 2\pi f_* \qquad (1)$$

Regardless of whether the power transmission resonator 111 corresponds to the series resonant circuit illustrated in FIG. 2 or the parallel resonant circuit illustrated in FIG. 3, the resonant frequency $\omega_1$ can be represented by Equation (2).

$$\omega_1 = \frac{1}{\sqrt{L_1 C_1}} \qquad (2)$$

Likewise, regardless of whether the power reception resonator 121 corresponds to the series resonant circuit illustrated in FIG. 4 or the parallel resonant circuit illustrated in FIG. 5, the resonant frequency $f_2$ can be represented by Equation (3).

$$\omega_2 = \frac{1}{\sqrt{L_2 C_2}} \qquad (3)$$

As described above, the power transmission resonator 111 may be roughly classified into the series resonant circuit illustrated in FIG. 2 and the parallel resonant circuit illustrated in FIG. 3. The power reception resonator 121 may similarly be roughly classified into the series resonant circuit illustrated in FIG. 4 and the parallel resonant circuit illustrated in FIG. 5. The input current characteristic of the power transmission resonator 111 varies depending on the type of the power transmission resonator 111 and the type of the power reception resonator 121. Hence, a case where both the power transmission resonator 111 and the power reception resonator 121 correspond to series resonant circuits is hereinafter referred to as a first resonator condition. A case where both the power transmission resonator 111 and the power reception resonator 121 correspond to parallel resonant circuits is hereinafter referred to as a second resonator condition. A case where the power transmission resonator 111 corresponds to a parallel resonant circuit and the power reception resonator 121 corresponds to a series resonant circuit is hereinafter referred to as a third resonator condition. A case where the power transmission resonator 111 corresponds to a series resonant circuit and the power reception resonator 121 corresponds to a parallel resonant circuit is hereinafter referred to as a fourth resonator condition.

FIG. 6 illustrates observation results for the input current to the power transmission resonator 111 under the first resonator condition and the first impedance condition. In FIG. 6 and FIGS. 7 to 13 described below, the axis of ordinate represents the input current [A], and the axis of abscissas represents the frequency [Hz]. Under these conditions, the imaginary part of the input impedance $Z_{OPEN}$ of the power transmission resonator 111 may be represented by:

$$\mathrm{Im}\, Z_{OPEN} = \frac{1}{\omega C_1} - \omega L_1 \qquad (4)$$

Based on the observation results in FIG. 6, the control apparatus 100 detects the specific frequency that provides the input current with the maximal value. At the specific frequency, the imaginary part of the input impedance $Z_{OPEN}$ of the power transmission resonator 111 is "0". When "0" is substituted into the left side of Equation (4) and the equation is solved for $\omega$, the right side of Equation (4) equals the right side of Equation (2) described above. Thus, the specific frequency is equal to the resonant frequency $f_1$.

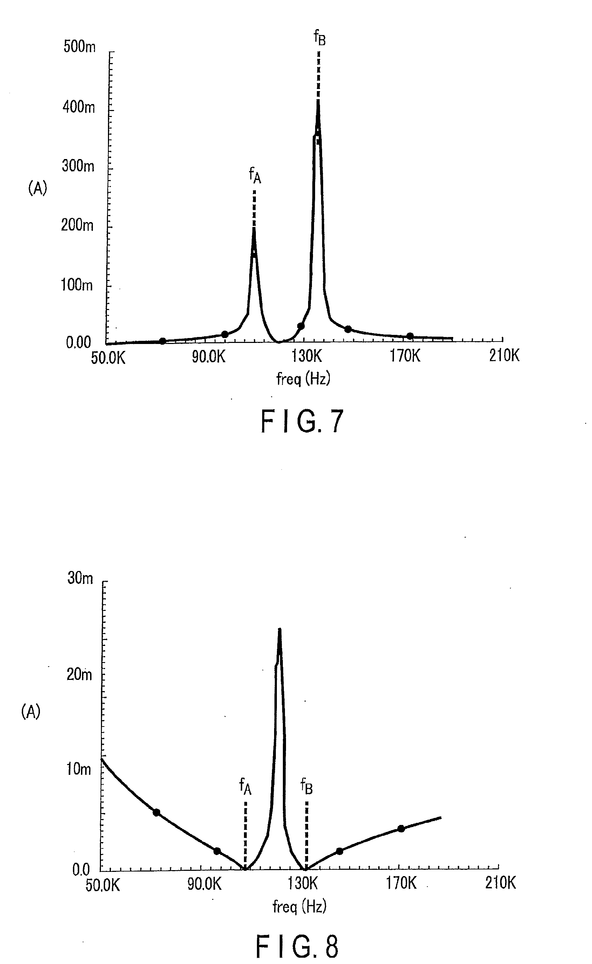

FIG. 7 illustrates observation results for the input current to the power transmission resonator 111 under the first resonator condition and the second impedance condition. Under these conditions, the imaginary part of the input impedance $Z_{OPEN}$ of the power transmission resonator 111 may be represented by:

$$\mathrm{Im}\, Z_{SHORT} = \frac{\dfrac{k^2 L_1 \omega^2}{L_2 C_2 \omega^2 - 1} + (k^2 - 1)L_1 \omega^2 + \dfrac{1}{C_1}}{\omega} \qquad (5)$$

Based on the observation results in FIG. 7, the control apparatus 100 detects two specific frequencies $f_A$ and $f_B$ that provide the input current with the maximal values. Here, $f_A < f_B$. At specific frequencies $\omega_A$ and $\omega_B$, the imaginary part of the input impedance $Z_{SHORT}$ of the power transmission resonator 111 is "0". Equation (6) and Equation (7) depicted below can be derived by substituting "0" into the left side of Equation (5) and solving the equation for $\omega$.

$$
\begin{aligned}
\omega_A &= \sqrt{\frac{2}{C_1 L_1 + C_2 L_2 + \sqrt{C_1{}^2 L_1{}^2 + C_2{}^2 L_2{}^2 + 2C_1 C_2 L_1 L_2 (2k^2 - 1)}}} \\[2mm]
&= \sqrt{\frac{2}{\dfrac{1}{\omega_1{}^2} + \dfrac{1}{\omega_2{}^2} + \sqrt{\dfrac{1}{\omega_1{}^4} + \dfrac{1}{\omega_2{}^4} + 2\dfrac{1}{\omega_1{}^2 \omega_2{}^2}(2k^2 - 1)}}}
\end{aligned}
\qquad (6)
$$

$$
\begin{aligned}
\omega_B &= \sqrt{\frac{2}{C_1 L_1 + C_2 L_2 - \sqrt{C_1{}^2 L_1{}^2 + C_2{}^2 L_2{}^2 + 2C_1 C_2 L_1 L_2 (2k^2 - 1)}}} \\[2mm]
&= \sqrt{\frac{2}{\dfrac{1}{\omega_1{}^2} + \dfrac{1}{\omega_2{}^2} - \sqrt{\dfrac{1}{\omega_1{}^4} + \dfrac{1}{\omega_2{}^4} + 2\dfrac{1}{\omega_1{}^2 \omega_2{}^2}(2k^2 - 1)}}}
\end{aligned}
\qquad (7)
$$

Moreover, combination of Equation (6) and Equation (7) allows Equations (8) to (10) depicted below to be derived.

$$k = \sqrt{\frac{-(\omega_1 - \omega_A)\,(\omega_1 + \omega_A)\,(\omega_1 - \omega_B)\,(\omega_1 + \omega_B)}{\omega_1{}^2(\omega_A{}^2 + \omega_B{}^2) - \omega_A{}^2\omega_B{}^2}}$$

$$= \sqrt{\frac{-(f_1 - f_A)\,(f_1 + f_A)\,(f_1 - f_B)\,(f_1 + f_B)}{f_1{}^2(f_A{}^2 + f_B{}^2) - f_A{}^2 f_B{}^2}} \tag{8}$$

$$\omega_2 = \frac{\omega_1 \omega_A \omega_B}{\sqrt{\omega_1{}^2(\omega_A{}^2 + \omega_B{}^2) - \omega_A{}^2\omega_B{}^2}} \tag{9}$$

$$f_2 = \frac{\omega_2}{2\pi} = \frac{\omega_1 \omega_A \omega_B}{2\pi\sqrt{\omega_1{}^2(\omega_A{}^2 + \omega_B{}^2) - \omega_A{}^2\omega_B{}^2}}$$

$$= \frac{f_1 f_A f_B}{\sqrt{f_1{}^2(f_A{}^2 + f_B{}^2) - f_A{}^2 f_B{}^2}} \tag{10}$$

In summary, the control apparatus 100 can estimate the resonant frequency $f_1$ by detecting the specific frequency that provides the input current with the maximal value under the first resonator condition and the first impedance condition. Moreover, the control apparatus 100 detects the two specific frequencies $f_A$ and $f_B$ that provide the input current with the maximal values under the first resonator condition and the second impedance condition. The control apparatus 100 can then estimate the coupling coefficient k and the resonant frequency $f_2$ by calculating Equation (8) and Equation (10) depicted above.

FIG. 8 illustrates observation results for the input current to the power transmission resonator 111 under the second resonator condition and the first impedance condition. Under these conditions, the imaginary part of the input impedance $Z_{OPEN}$ of the power transmission resonator 111 may be represented by:

$$\mathrm{Im}\,Z_{OPEN} = \frac{L_1\omega(\,(k^2 - 1)L_2 C_2 \omega^2 + 1)}{(k^2 - 1)C_1 C_2 L_1 L_2 \omega^4 + (C_1 L_1 + C_2 L_2)\omega^2 - 1} \tag{11}$$

Based on the observation results in FIG. 8, the control apparatus 100 detects two specific frequencies $f_A$ and $f_B$ that provide the input current with the minimal values. Here, $f_A < f_B$. At the specific frequencies $\omega_A$ and $\omega_B$, the imaginary part of the input impedance $Z_{OPEN}$ of the power transmission resonator 111 is "∞". Equation (6) and Equation (7) depicted above can be derived by substituting "∞" into the left side of Equation (11), that is, solving the equation with the denominator of the right side = 0, for $\omega$.

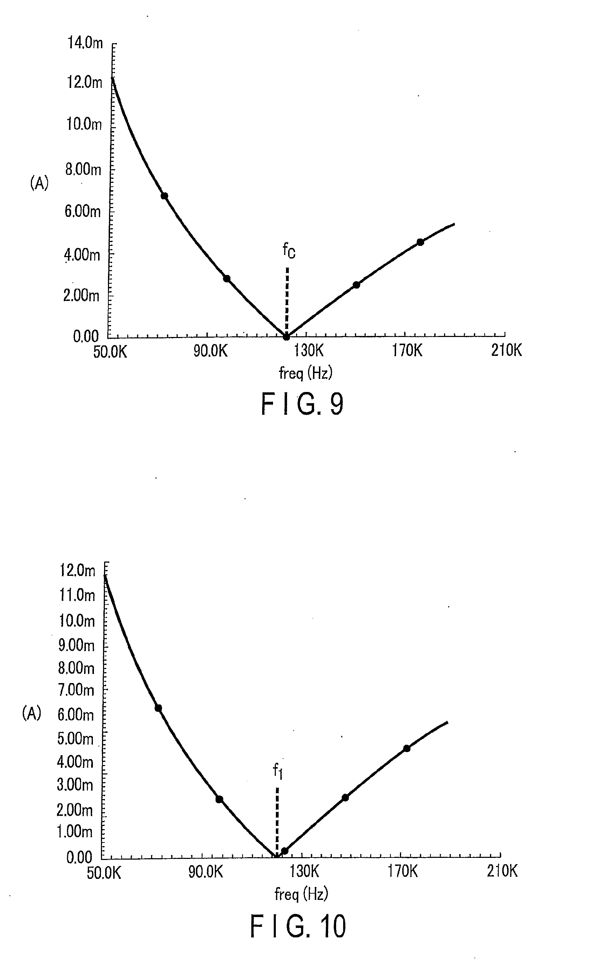

FIG. 9 illustrates observation results for the input current to the power transmission resonator 111 under the second resonator condition and the second impedance condition. Under these conditions, the imaginary part of the input impedance $Z_{SHORT}$ of the power transmission resonator 111 may be represented by:

$$\mathrm{Im}\,Z_{SHORT} = -\frac{L_1\omega(k^2 - 1)}{L_1 C_1 (k^2 - 1)\omega^2 + 1} \tag{12}$$

Based on the observation results in FIG. 9, the control apparatus 100 detects a specific frequency $f_C$ that provides the input current with the minimal value. At a specific frequency $\omega_C$, the imaginary part of the input impedance $Z_{SHORT}$ of the power transmission resonator 111 is "∞". Equation (13) depicted below can be derived by substituting "∞" into the left side of Equation (12), that is, solving the equation with the denominator of the right side = 0, for $\omega$.

$$\omega_C = \frac{1}{\sqrt{L_1 C_1 (1 - k^2)}}$$

$$= \frac{1}{\sqrt{\frac{1}{\omega_1^2}(1 - k^2)}} \qquad (13)$$

Moreover, combination of Equation (6), Equation (7), and Equation (13) allows Equations (14) to (18) depicted below to be derived.

$$k = \sqrt{\frac{-(\omega_A - \omega_C)\ (\omega_B - \omega_C)\ (\omega_A + \omega_C)\ (\omega_B + \omega_C)}{\omega_C^2(\omega_A^2 + \omega_B^2) - \omega_C^4}}$$

$$= \sqrt{\frac{-(f_A - f_C)\ (f_B - f_C)\ (f_A + f_C)\ (f_B + f_C)}{f_C^2(f_A^2 + f_B^2) - f_C^4}} \qquad (14)$$

$$\omega_1 = \frac{\omega_A \omega_B}{\sqrt{\omega_A^2 + \omega_B^2 - \omega_C^2}} \qquad (15)$$

$$f_1 = \frac{\omega_1}{2\pi} = \frac{\omega_A \omega_B}{2\pi\sqrt{\omega_A^2 + \omega_B^2 - \omega_C^2}}$$

$$= \frac{f_A f_B}{\sqrt{f_A^2 + f_B^2 - f_C^2}} \qquad (16)$$

$$\omega_2 = \frac{\omega_A \omega_B}{\omega_C} \qquad (17)$$

$$f_2 = \frac{\omega_2}{2\pi} = \frac{\omega_A \omega_B}{2\pi\omega_C}$$

$$= \frac{f_A f_B}{f_C} \qquad (18)$$

In summary, the control apparatus 100 detects the two specific frequencies $f_A$ and $f_B$ that provide the input current with the minimal values under the second resonator condition and the first impedance condition. Moreover, the control apparatus 100 detects the specific frequencies $f_C$ that provides the input current with the minimal value under the second resonator condition and the second impedance condition. The control apparatus 100 can then estimate the coupling coefficient k, the resonant frequency $f_1$, and the resonant frequency $f_2$ by calculating Equation (14), Equation (16), and Equation (18) depicted above.

FIG. 10 illustrates observation results for the input current to the power transmission resonator 111 under the third resonator condition and the first impedance condition. Under these conditions, the imaginary part of the input impedance $Z_{OPEN}$ of the power transmission resonator 111 may be represented by Equation (19).

$$\mathrm{Im}\,Z_{OPEN} = \frac{\omega L_1}{1 - L_1 C_1 \omega^2} \qquad (19)$$

Based on the observation results in FIG. 10, the control apparatus 100 detects the specific frequency that provides the input current with the minimal value. At the specific frequency, the imaginary part of the input impedance $Z_{OPEN}$ of the power transmission resonator 111 is "∞". When "∞" is substituted into the left side of Equation (19), that is, the equation with the denominator of the right side = 0 is solved for $\omega$, the right side of Equation (19) equals the right side of Equation (2). Thus, the specific frequency is equal to the resonant frequency $f_1$ of the power transmission resonator 111.

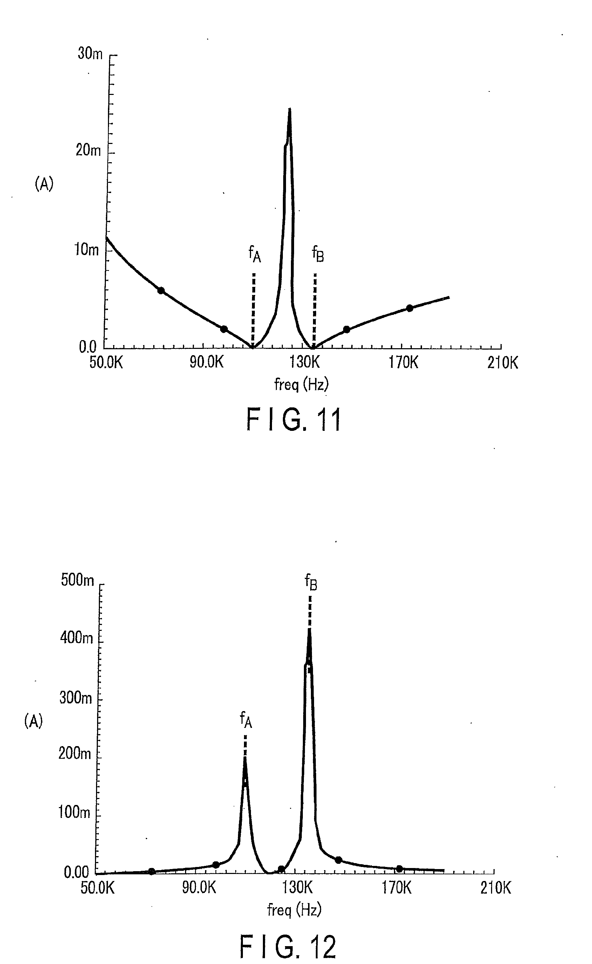

FIG. 11 illustrates observation results for the input current to the power transmission resonator 111 under the third resonator condition and the second impedance condition. Under these conditions, the imaginary part of the input impedance $Z_{SHORT}$ of the power transmission resonator 111 may be represented by:

$$\mathrm{Im}\,Z_{SHORT} = \frac{L_1 \omega(\,(k^2 - 1)L_2 C_2 \omega^2 + 1)}{(k^2 - 1)C_1 C_2 L_1 L_2 \omega^4 + (C_1 L_1 + C_2 L_2)\omega^2 - 1} \qquad (20)$$

Based on the observation results in FIG. 11, the control apparatus 100 detects the two specific frequencies $f_A$ and $f_B$ that provide the input current with the minimal values. Here, $f_A < f_B$. At the specific frequencies $\omega_A$ and $\omega_B$, the imaginary part of the input impedance $Z_{SHORT}$ of the power transmission resonator 111 is "∞". Equation (6) and Equation (7) depicted above can be derived by substituting "∞" into the left side of Equation (20), that is, solving the equation with the denominator of the right side = 0, for $\omega$. Thus, Equation (8) and Equation (10) depicted above allow the coupling coefficient k and the resonant frequency $f_2$ to be estimated.

In summary, the control apparatus 100 can estimate the resonant frequency $f_1$ by detecting the specific frequency that provides the input current with the minimal value under the third resonator condition and the first impedance condition. Moreover, the control apparatus 100 detects the specific frequencies $f_A$ and $f_B$ that provide the input current with the minimal values under the third resonator condition and the second impedance condition. The control apparatus 100 can then estimate the coupling coefficient k and the resonant frequency $f_2$ by calculating Equation (8) and Equation (10) depicted above.

FIG. 12 illustrates observation results for the input current to the power transmission resonator 111 under the fourth resonator condition and the first impedance condition. Under these conditions, the imaginary part of the input impedance $Z_{OPEN}$ of the power transmission resonator 111 may be represented by:

$$\mathrm{Im}\,Z_{OPEN} = \frac{\dfrac{k^2 L_1 \omega^2}{L_2 C_2 \omega^2 - 1} + (k^2 - 1)L_1 \omega^2 + \dfrac{1}{C_1}}{\omega} \qquad (21)$$

Based on the observation results in FIG. 12, the control apparatus 100 detects the two specific frequencies $f_A$ and $f_B$ that provide the input current with the maximal values. Here, $f_A < f_B$. At the specific frequencies $\omega_A$ and $\omega_B$, the imaginary part of the input impedance $Z_{OPEN}$ of the power transmission resonator 111 is "0". Equation (6) and Equation (7) depicted above can be derived by substituting "∞" into the left side of Equation (21), that is, solving the equation with the denominator of the right side = 0, for $\omega$.

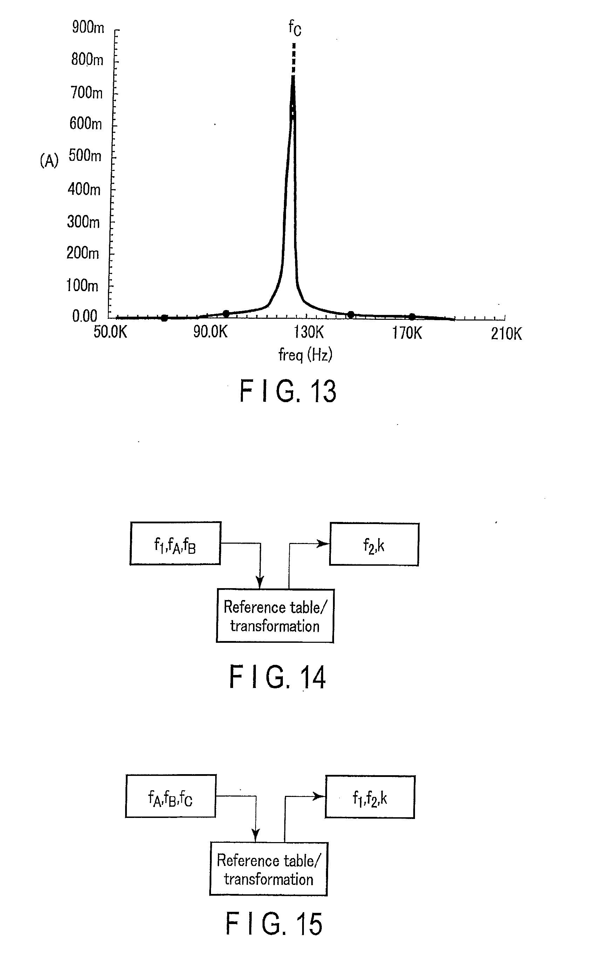

FIG. 13 illustrates observation results for the input current to the power transmission resonator 111 under the fourth resonator condition and the second impedance condition. Under these conditions, the imaginary part of the input impedance $Z_{SHORT}$ of the power transmission resonator 111 may be represented by:

$$\mathrm{Im}\,Z_{SHORT} = \frac{L_1 C_1 (k^2 - 1)\omega^2 + 1}{C_1 \omega} \qquad (22)$$

Based on the observation results in FIG. 13, the control apparatus 100 detects the specific frequency $f_C$ that provides the input current with the maximal value. At the specific frequency $\omega_C$, the imaginary part of the input impedance

$Z_{SHORT}$ of the power transmission resonator 111 is "0". Equation (13) depicted above can be derived by substituting "0" into the left side of Equation (22) and then solving the equation for $\omega$. Thus, Equation (14), Equation (16), and Equation (18) depicted above allow the coupling coefficient k, the resonant frequency $f_1$, and the resonant frequency $f_2$ to be estimated.

In summary, the control apparatus 100 can estimate the two specific frequencies $f_A$ and $f_B$ that provide the input current with the maximal values under the fourth resonator condition and the first impedance condition. Moreover, the control apparatus 100 detects the specific frequency $f_C$ that provides the input current with the maximal value under the fourth resonator condition and the second impedance condition. The control apparatus 100 can then estimate the coupling coefficient k, the resonant frequency $f_1$, and the resonant frequency $f_2$ by calculating Equation (14), Equation (16), and Equation (18) depicted above.

Thus, when the power transmission resonator 111 and the power reception resonator 121 meet the first resonator condition or the third resonator condition, the control apparatus 100 may operate as follows.

That is, the control apparatus 100 estimates the resonant frequency $f_1$ by detecting the specific frequency under the first impedance condition. Moreover, the control apparatus 100 estimates the coupling coefficient k and the resonant frequency $f_2$ by using the specific frequencies $f_1$, $f_A$, and $f_B$ to operate transformations corresponding to Equation (8) and Equation (10) depicted above as illustrated in FIG. 14. Instead of operating the transformations, the control apparatus 100 may use a prepared reference table to estimate the coupling coefficient k and resonant frequency $f_2$ corresponding to the combination of the specific frequencies $f_1$, $f_A$, and $f_B$.

When the power transmission resonator 111 and the power reception resonator 121 meet the second resonator condition or the fourth resonator condition, the control apparatus 100 may operate as follows.

That is, the control apparatus 100 estimates the coupling coefficient k, the resonant frequency $f_1$, and the resonant frequency $f_2$ by using the specific frequencies $f_A$, $f_B$, and $f_C$ to operate transformations corresponding to Equation (14), Equation (16), and Equation (18) depicted above as illustrated in FIG. 14. Instead of operating the transformations, the control apparatus 100 may use a prepared reference table to estimate the coupling coefficient k, the resonant frequency $f_1$, and resonant frequency $f_2$ corresponding to the combination of the specific frequencies $f_A$, $f_B$, and $f_C$.

As described above, in the wireless power transmission system according to the first embodiment, the control apparatus detects a plurality of specific frequencies under the first impedance condition and the second impedance condition to estimate the coupling coefficient, the resonant frequency of the power transmission resonator, and the resonant frequency of the power reception resonator based on the plurality of specific frequencies. Thus, even when the resonant frequency of the power transmission resonator and the resonant frequency of the power reception resonator are unknown, the coupling coefficient, the resonant frequency of the power transmission resonator, and the resonant frequency of the power reception resonator can be estimated.

Moreover, for the control apparatus, the absolute accuracy of a measurement circuit for the current, voltage, or power of the input signal to the power transmission resonator may be sufficient to allow the specific frequencies to be detected. Rather, the estimation accuracy for the coupling coefficient, the resonant frequency of the power transmission resonator, and the resonant frequency of the power reception resonator depend on the absolute accuracy of the signal frequency of the input signal to the power transmission resonator.

Hence, the control apparatus allows the input current, voltage, or power characteristic to be observed using an inexpensive measurement circuit not having a high absolute accuracy without sacrificing the estimation accuracy for the coupling coefficient, the resonant frequency of the power transmission resonator, and the resonant frequency of the power reception resonator. In view of the current oscillation circuit technique, an oscillation circuit that enables the signal frequency to be accurately controlled is relatively inexpensively available.

(Second Embodiment)

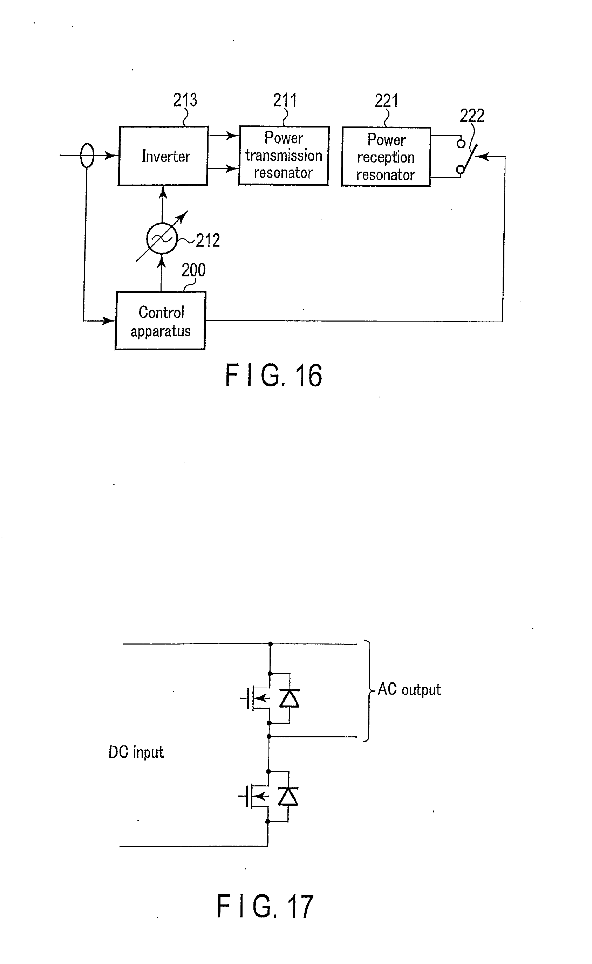

As illustrated in FIG. 16, a wireless power transmission system according to a second embodiment includes a control apparatus 200, a power transmission resonator 211, a driving signal source 212, an inverter 213, a power reception resonator 221, and a variable impedance element 222.

The power transmission resonator 211 may be identical or similar to the above-described power transmission resonator 111. The power reception resonator 221 may be identical or similar to the above-described power reception resonator 121. The variable impedance element 222 may be identical or similar to the above-described variable impedance element 122. The control apparatus 200 is different from the control apparatus 100 in some of the operations.

The driving signal source 212 and inverter 213 in FIG. 16 may be considered to be a constant-voltage, frequency-variable signal source. That is, the driving signal source 212 and the inverter 213 correspond to a form of the frequency-variable signal source 112 in FIG. 1.

The driving signal source 212 generates a switching signal for driving the inverter 213. The driving signal source 212 sweeps the frequency of the switching signal in accordance with a control signal from the control apparatus 200.

The inverter 213 may be a single-phase inverter illustrated in FIG. 17 or a differential inverter illustrated in FIG.

18. The inverter 213 generates an alternating current with a frequency component determined by the switching signal from the driving signal source 212. The inverter 213 supplies the generated alternating current to the power transmission resonator 211. The inverter 213 is suitable for applications in which high transmission power is generated in the wireless power transmission system.

The control apparatus 200 provides the control signal to the driving signal source 212 in order to sweep the frequency of the input signal to the power transmission resonator 212 under at least two of the above-described impedance conditions. The control signal allows the frequency of the switching signal generated by the driving signal source 212 to be swept. As a result, the frequency of the input signal to the power transmission resonator 211 generated by the inverter 213 is also swept.

In this regard, the input current characteristic of the power transmission resonator 211 depends on the input current characteristic of the inverter 213. Thus, during the period of the frequency sweep, the control apparatus 200 may observe the input current characteristic of the inverter 213 or observe the input current characteristic of the power transmission resonator 211 instead of the input current characteristic of the inverter 213. It should be noted that, when the inverter 213 includes a smoothing capacitor on an input side thereof, the input current to the inverter 213 may be considered to be a substantially direct current. Hence, the control apparatus 200 can observe the input current to the inverter 213 using a simpler measurement circuit than when observing the input current (alternating current) to the power transmission resonator 211.

As described above, the wireless power transmission system according to the second embodiment adopts the inverter and the driving signal source as the frequency-variable signal source. Thus, the wireless power transmission system allows the inverter and driving signal source, generally provided in the power transmission apparatus, to be also used as the frequency-variable signal source. This enables suppression of a possible increase in the number of components of the power transmission apparatus.

(Third Embodiment)

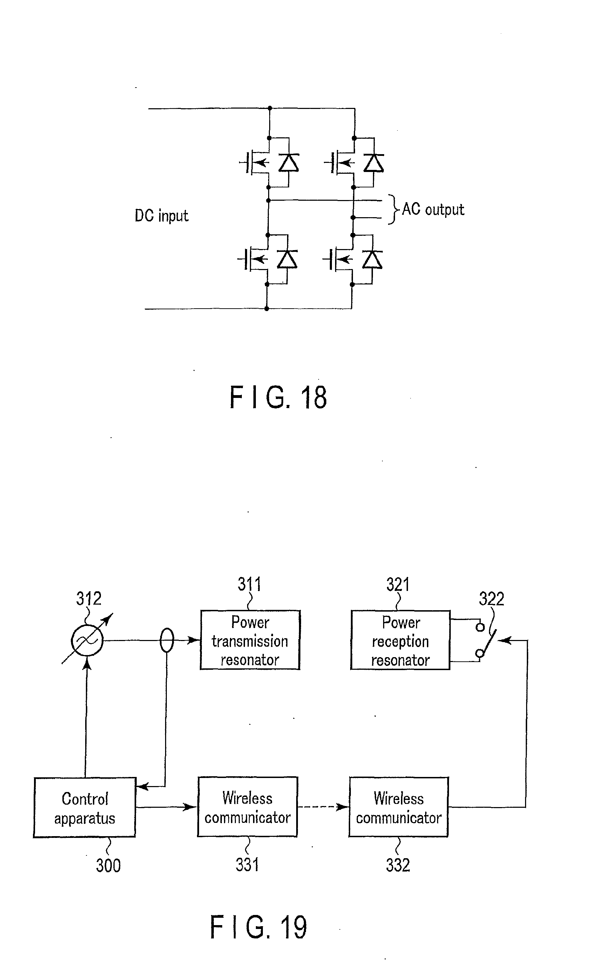

As illustrated in FIG. 19, a wireless power transmission system according to a third embodiment includes a control apparatus 300, a power transmission resonator 311, a frequency-variable signal source 312, a power reception resonator 321, a variable impedance element 322, a wireless communicator 331, and a wireless communicator 332.

The power transmission resonator 311 may be identical or similar to the above-described power transmission resonator 111. The frequency-variable signal source 312 may be identical or similar to the above-described frequency-variable signal source 112 or the above-described driving signal source 212 and inverter 213. The power reception resonator 321 may be identical or similar to the above-described power reception resonator 121. The variable impedance element 322 may be identical or similar to the above-described variable impedance element 122. The control apparatus 300 is different from the control apparatus 100 or control apparatus 200 in some of the operations.

The control apparatus 300 outputs a control signal for setting the impedance in the variable impedance element 322 to the wireless communicator 331.

Upon receiving the control signal, the wireless communicator 331 wirelessly transmits the control signal to the wireless communicator 332. The wireless communicator 331 may be incorporated in the control apparatus 300 or into the power transmission apparatus along with the control apparatus 300.

Upon receiving the control signal, the wireless communicator 332 outputs the control signal to the variable impedance element 322. The wireless communicator 332 is incorporated in the power reception apparatus.

When the control apparatus 300 is not incorporated in the power transmission apparatus, a wireless communicator not depicted in the drawings may be incorporated into the power transmission apparatus. The wireless communicator wirelessly exchanges various signals with the wireless communicator 331 (or another wireless communicator not depicted in the drawings). The signals may include, for example, the control signal for allowing the frequency of the input signal to the power transmission resonator 311 to be swept and a signal indicative of a measurement result for the current, voltage, or power of the input signal to the power transmission resonator 311. Moreover, when the control apparatus 300 is incorporated in the power reception apparatus, the wireless communicator 332 may be omitted.

As described above, in the wireless power transmission system according to the third embodiment, the signals are wirelessly exchanged at least either between the control apparatus and the power transmission apparatus or between the control apparatus and the power reception apparatus. Thus, the wireless power transmission system enables the control apparatus and the power transmission apparatus to be mechanically separated from each other or enables the control apparatus and the power reception apparatus to be mechanically separated from each other.

(Fourth Embodiment)

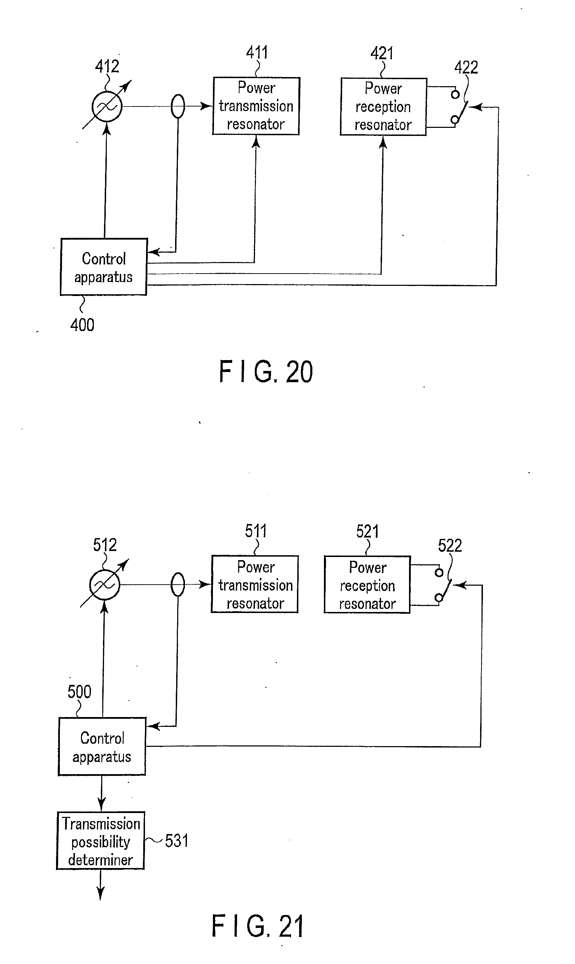

As illustrated in FIG. 20, a wireless power transmission system according to a fourth embodiment includes a control apparatus 400, a power transmission resonator 411, a frequency-variable signal source 412, a power reception resonator 421, and a variable impedance element 422.

The frequency-variable signal source 412 may be identical or similar to the above-described frequency-variable signal source 112 or the above-described driving signal source 212 and inverter 213. The variable impedance element 422 may be identical or similar to the above-described variable impedance element 122. The control apparatus 400 is different from the control apparatus 100, control apparatus 200, or control apparatus 300 in some of the operations.

At least one of the power transmission resonator 411 and the power reception resonator 421 allow the resonant frequency thereof to be changed in accordance with the control performed by the control apparatus 400. To make the resonant frequency variable, for example, the resonant circuit may be formed using a variable inductor or a variable capacitor or may incorporate an impedance converter.

As described above in the embodiments, the control apparatus 400 estimates the coupling coefficient, the resonant frequency of the power transmission resonator 411, and the resonant frequency of the power reception resonator 421. When the resonant frequency of the power transmission resonator 411 or the power reception resonator 421 does not have the desired value, the control apparatus 400 provides a control signal for changing the resonant frequency to the power transmission resonator 411 or the power reception resonator 421. After providing the control signal, the control apparatus 400 estimates the resonant frequency of the power transmission resonator 411 or the power reception resonator 421 again and may provide the control signal again as needed.

In general, the resonant frequency of the power transmission resonator 411 and the resonant frequency of the power reception resonator 421 are preferably equal to a power transmission frequency. However, under various conditions such as a desired transmission power value, the resonant frequency of the power transmission resonator 411 or the resonant frequency of the power reception resonator 421 may be desired to have a value different from the value of the power transmission frequency. Thus, the desired value is not limited to the value of the power transmission frequency but may be set to any value.

As described above, in the wireless power transmission system according to the fourth embodiment, the control apparatus adjusts the resonant frequency of the power transmission resonator or the resonant frequency of the power reception resonator based on the estimation result for the resonant frequency. Thus, the control apparatus enables an increase in power transmission efficiency and allows the transmission power value or transmission efficiency to be stably controlled.

(Fifth Embodiment)

As illustrated in FIG. 21, a wireless power transmission system according to a fifth embodiment includes a control apparatus 500, a power transmission resonator 511, a frequency-variable signal source 512, a power reception resonator 521, a variable impedance element 522, a variable impedance element 522, and a transmission possibility determiner 531.

The power transmission resonator 511 may be identical or similar to the above-described power transmission resonator 111 or power transmission resonator 411. The frequency-variable signal source 512 may be identical or similar to the above-described frequency-variable signal source 112 or the above-described driving signal source 212 and inverter 213. The power reception resonator 521 may be identical or similar to the above-described power reception resonator 121 or power reception resonator 421. The variable impedance element 522 may be identical or similar to the above-described variable impedance element 122. The control apparatus 500 is different from the control apparatus 100, control apparatus 200, control apparatus 300, or control apparatus 400 in some of the operations.

Before wireless power transmission is started, the control apparatus 500 estimates the coupling coefficient, the resonant frequency of the power transmission resonator 511, and the resonant frequency of the power reception resonator 521 as described above in the embodiments. The control apparatus 500 provides some or all of the estimation results to the transmission possibility determiner 531.

The transmission possibility determiner 531 may be incorporated in the control apparatus 500, the power transmission apparatus, or the power reception apparatus or in an apparatus independent of these apparatuses. The transmission possibility determiner 531 determines whether or not future wireless power transmission is normally executable, based on the estimation results from the control apparatus 500. For example, the transmission possibility determiner 531 determines that the wireless power transmission is not normally executable when at least one of the coupling coefficient, the resonant frequency of the power transmission resonator 511, and the resonant frequency of the power reception resonator 521 deviates from the allowable range thereof.

The transmission possibility determiner 531 notifies the outside of the wireless power transmission system (for example, a user or an operator) of information on a determination result. The information on the determination result may be provided through, for example, an image, a lighting pattern of a lamp, a voice, an alarm sound, vibration, or the like. When the wireless power transmission is determined to be normally executable, the wireless power transmission may be immediately started with the notification omitted.

Since the determination result indicating that the wireless power transmission is not normally executable is pre-reported, the user can be urged to change a usage environment for the wireless power transmission system (for example, when the power reception apparatus is an electric car or a hybrid car, the car is driven forward or backward). This allows prevention of various contingencies resulting from the impossibility of normal execution of the future wireless power transmission (for example, charging fails to be completed before the next use or charging efficiency is significantly below the user's expectations).

As described above, the wireless power transmission system according to the fifth embodiment determines whether or not the future wireless power transmission is normally executable and notifies, for example, the user of the determination result. Thus, in the wireless power transmission system, the user is allowed to deal with the reported determination result and can prevent various contingencies resulting from the impossibility of normal execution of the future wireless power transmission.

(Sixth Embodiment)

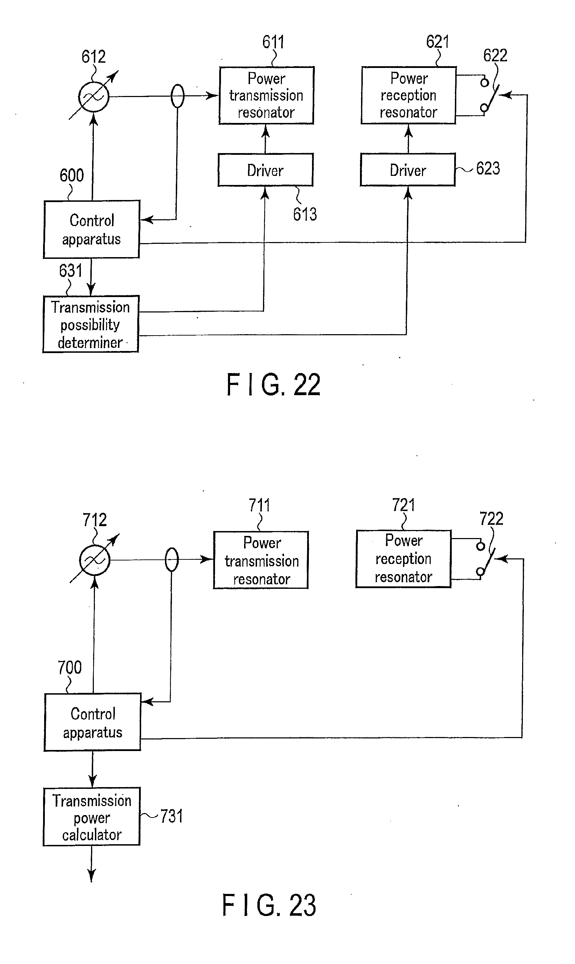

As illustrated in FIG. 22, a wireless power transmission system according to a sixth embodiment includes a control apparatus 600, a power transmission resonator 611, a frequency-variable signal source 612, a driver 613, a power reception resonator 621, a variable impedance element 622, a driver 623, and a transmission possibility determiner 631.

The frequency-variable signal source 612 may be identical or similar to the above-described frequency-variable signal source 112 or the above-described driving signal source 212 and inverter 213. The variable impedance element 622 may be identical or similar to the above-described variable impedance element 122. The control apparatus 600 is different from the control apparatus 100, control apparatus 200, control apparatus 300, control apparatus 400, or control apparatus 500 in some of the operations.

Before wireless power transmission is started, the control apparatus 600 estimates the coupling coefficient, the resonant frequency of the power transmission resonator 611, and the resonant frequency of the power reception resonator 621 as described above in the embodiments. The control apparatus 600 provides some or all of the estimation results to the transmission possibility determiner 631.

The transmission possibility determiner 631 may be incorporated in the control apparatus 600, the power transmission apparatus, or the power reception apparatus or in an apparatus independent of these apparatuses. The transmission possibility determiner 631 determines whether or not future wireless power transmission is normally executable, based on the estimation results from the control apparatus 600. For example, the transmission possibility determiner 631 determines that the wireless power transmission is not normally executable when at least one of the coupling coefficient, the resonant frequency of the power transmission resonator 611, and the resonant frequency of the power reception resonator 621 deviates from the allowable range thereof.

The transmission possibility determiner 631 generates a control signal based on the determination result and provides the control signal to the driver 613 and the driver 623. When the wireless power transmission is determined to be normally executable, the wireless power transmission may be immediately started with the generation of the control signal omitted.

The power transmission resonator 611 is different from the above-described power transmission resonator 111 or power transmission resonator 411 in that the power transmission resonator 611 includes a mechanical moving mechanism. The driver 613 can move the power transmission resonator 611 by driving the moving mechanism provided in the power transmission resonator 611.

For example, the position to which the power transmission resonator 611 is to be moved, the moving distance of the power transmission resonator 611, the moving direction of the power transmission resonator 611, and the like may be determined by the control signal from the transmission possibility determiner 631. Furthermore, the transmission possibility determiner 631 may repeatedly make determinations until the transmission possibility determiner 631 determines that the wireless power transmission is normally executable and repeatedly provide the driver 613 with a control signal for giving an instruction to move the power transmission resonator 611. Additionally, the driver 613 may drive the moving mechanism provided in the power transmission resonator 611 so that the distance between the power transmission resonator 611 and the power reception resonator 621, measured using, for example, a range finding sensor, falls within the allowable range thereof. The driver 613 may adjust the inclination of the power transmission resonator 611 through the moving mechanism or another mechanism.

The power reception resonator 621 is different from the above-described power reception resonator 121 or power reception resonator 421 in that the power reception resonator 621 includes a mechanical moving mechanism. The driver 623 can move the power reception resonator 621 by driving the moving mechanism provided in the power reception resonator 621.

For example, the position to which the power reception resonator 621 is to be moved, the moving distance of the power reception resonator 621, the moving direction of the power reception resonator 621, and the like may be determined by the control signal from the transmission possibility determiner 631. Furthermore, the transmission possibility determiner 631 may repeatedly make determinations until the transmission possibility determiner 631 determines that the wireless power transmission is normally executable and repeatedly provide the driver 623 with a control signal for giving an instruction to move the power reception resonator 621. Additionally, the driver 623 may drive the moving mechanism provided in the power reception resonator 621 so that the distance between the power reception resonator 621 and the power transmission resonator 611, measured using, for example, the range finding sensor, falls within the allowable range thereof. The driver 623 may adjust the inclination of the power reception resonator 621 through the moving mechanism or another mechanism.

One of the moving mechanisms in the power transmission resonator 611 and power reception resonator 621 may be omitted. When the moving mechanism in the power transmission resonator 611 is omitted, the driver 613 is not needed. When the moving mechanism in the power reception resonator 621 is omitted, the driver 623 is not needed.

As described above, the wireless power transmission system according to the sixth embodiment determines whether or not the future wireless power transmission is normally executable, and at least one of the power transmission resonator and the power reception resonator automatically moves based on the determination result. Thus, in the wireless power transmission system, the positional relation between the power transmission resonator and the power reception resonator is automatically corrected. This allows prevention of various contingencies resulting from the impossibility of normal execution of the future wireless power transmission.

(Seventh Embodiment)

As illustrated in FIG. 23, a wireless power transmission system according to a seventh embodiment includes a control apparatus 700, a power transmission resonator 711, a frequency-variable signal source 712, a power reception resonator 721, a variable impedance element 722, and a transmission power calculator 731.

The power transmission resonator 711 may be identical or similar to the above-described power transmission resonator 111, the above-described power transmission resonator 411, or the above-described power transmission resonator 611 and driver 613. The frequency-variable signal source 712 may be identical or similar to the above-described frequency-variable signal source 112 or the above-described driving signal source 212 and inverter 213.

The power reception resonator 721 may be identical or similar to the above-described power reception resonator 121, power reception resonator 421, or power reception resonator 621 and driver 623. The variable impedance element 722 may be identical or similar to the above-described variable impedance element 122. The control apparatus 700 is different from the control apparatus 100, control apparatus 200, control apparatus 300, control apparatus 400, control apparatus 500, or control apparatus 600 in some of the operations.

Before wireless power transmission is started, the control apparatus 700 estimates the coupling coefficient, the resonant frequency of the power transmission resonator 711, and the resonant frequency of the power reception resonator 721 as described above in the embodiments. The control apparatus 700 provides some or all of the estimation results to the transmission power calculator 731.

The transmission power calculator 731 may be incorporated in the control apparatus 700, the power transmission apparatus, or the power reception apparatus or in an apparatus independent of these apparatuses. The transmission power calculator 731 calculates a predictive value for transmission power in future wireless power transmission based on estimation results from the control apparatus 700. For example, the transmission power calculator 731 may calculate the predictive value for the transmission power by applying a reference table or a transformation to the coupling coefficient, the resonant frequency of the power transmission resonator 711, and the resonant frequency of the power reception resonator 721. The reference table or the transformation may be statistically derived based on actual measurement results or derived by theoretical calculations.

The transmission power calculator 731 notifies the outside of the wireless power transmission system (for example, the user or operator) of information on the predictive value for the transmission power. The information on the predictive value for the transmission power may be provided through, for example, an image, a lighting pattern of a lamp, a voice, an alarm sound, vibration, or the like.

As described above, in the wireless power transmission system according to the seventh embodiment, the predictive value for the transmission power in the wireless power transmission is pre-calculated, and the information on the predictive value for the transmission power is reported to, for example, the user. Thus, the wireless power transmission system allows the user to pre-recognize the information on the predictive value for the transmission power. This allows prevention of various contingencies resulting from a failure to report such information (for example, charging fails to be completed before the next use or an actual transmission power value is significantly below the user's expectations).

(Eighth Embodiment)

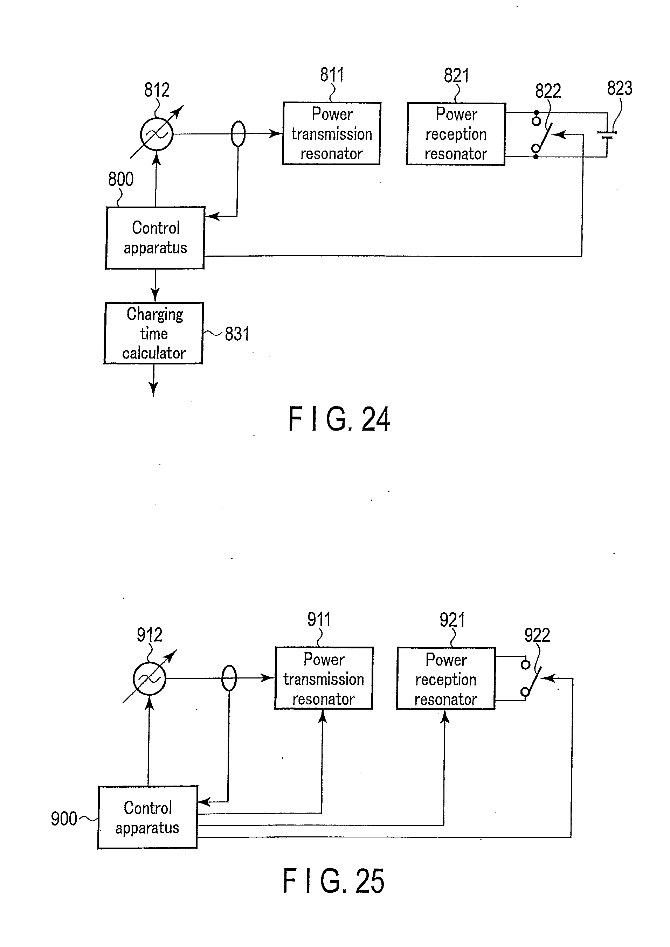

As illustrated in FIG. 24, a wireless power transmission system according to an eighth embodiment includes a control apparatus 800, a power transmission resonator 811, a frequency-variable signal source 812, a power reception resonator 821, a variable impedance element 822, a secondary battery 823, and a charging time calculator 831.

The power transmission resonator 811 may be identical or similar to the above-described power transmission resonator 111, the above-described power transmission resonator 411, or the above-described power transmission resonator 611 and driver 613. The frequency-variable signal source 812 may be identical or similar to the above-described frequency-variable signal source 112 or the above-described driving signal source 212 and inverter 213.

The power reception resonator 821 may be identical or similar to the above-described power reception resonator 121, the above-described power reception resonator 421, or the above-described power reception resonator 621 and driver 623. The variable impedance element 822 may be identical or similar to the above-described variable impedance element 122. The control apparatus 800 is different from the control apparatus 100, control apparatus 200, control apparatus 300, control apparatus 400, control apparatus 500, control apparatus 600, or control apparatus 700 in some of the operations.

The secondary battery 823 is connected to the power reception resonator 821. The secondary battery 823 is charged with power received through wireless power transmission.

Before the wireless power transmission is started, the control apparatus 800 estimates the coupling coefficient, the resonant frequency of the power transmission resonator 811, and the resonant frequency of the power reception resonator 821 as described above in the embodiments. The control apparatus 800 provides some or all of the estimation results to the charging time calculator 831.

The charging time calculator 831 may be incorporated in the control apparatus 800, the power transmission apparatus, or the power reception apparatus or in an apparatus independent of these apparatuses. The charging time calculator 831 calculates a predictive value for a charging time for the secondary battery 823 through future wireless power transmission based on the estimation results from the control apparatus 800. For example, the charging time calculator 831 may calculate the predictive value for the charging time for the secondary battery 823 by applying a reference table or a transformation to the coupling coefficient, the resonant frequency of the power transmission resonator 811, and the resonant frequency of the power reception resonator 821. The reference table or the transformation may be statistically derived based on actual measurement results or derived by theoretical calculations.

The charging time calculator 831 notifies the outside of the wireless power transmission system (for example, the user or operator) of information on the charging time for the secondary battery 823 (for example, a predictive value for the amount of time remaining before full charge or a predictive value for the point in time when the secondary battery is fully charged). The information on the predictive value for the charging time may be provided through, for example, an image, a lighting pattern of a lamp, a voice, an alarm sound, vibration, or the like.

As described above, in the wireless power transmission system according to the eighth embodiment, the predictive value for the charging time for the secondary battery through future wireless power transmission is pre-calculated, and the user is notified of the information on the predictive value for the charging time. Thus, the wireless power transmission system allows the information on the predictive value for the charging time to be pre-recognized. This enables prevention of various contingencies resulting from a failure to report such information (for example, charging of the secondary battery is not completed at the point in time expected by the user).

(Ninth Embodiment)

As illustrated in FIG. 25, a wireless power transmission system according to a ninth embodiment includes a control apparatus 900, a power transmission resonator 911, a frequency-variable signal source 912, a power reception resonator 921, and a variable impedance element 922.

The variable impedance element 922 may be identical or similar to the above-described variable impedance element 122. The control apparatus 900 is different from the above-described control apparatus 100, control apparatus 200, control apparatus 300, control apparatus 400, control apparatus 500, control apparatus 600, control apparatus 700, and control apparatus 800 in some of the operations.

The power transmission resonator 911 is assumed to enable the resonant frequency to be changed, for example, like the above-described power transmission resonator 411 or the power transmission resonator 611 and driver 613. Similarly, the power reception resonator 921 is assumed to enable the resonant frequency to be changed, for example, like the above-described power reception resonator 421 or the above-described power reception resonator 621 and driver 623.

The frequency-variable signal source 912 may be identical or similar to the above-described frequency-variable signal source 112 or the above-described driving signal source 212 and inverter 213. However, a set voltage, a set current, or a set power for the frequency-variable signal source 912 is set by a control signal from the control apparatus 900.

As described above in the embodiments, the control apparatus 900 detects a plurality of specific frequencies in order to estimate the coupling coefficient, the resonant frequency of the power transmission resonator 911, and the resonant frequency of the power reception resonator 921. However, the control apparatus 900 may fail to correctly detect the plurality of specific frequencies. Such an event may occur, for example, when the maximal value of the current, voltage, or power of the input signal to the power transmission resonator 911 is smaller than the sensitivity level of the measurement circuit or when at least one of the plurality of specific frequencies falls out of the range of frequency sweep for the input signal to the power transmission resonator 911.

Thus, upon failing to correctly detect the plurality of frequencies, the control apparatus 900 may increase or reduce the set voltage, set current, or set power for the frequency-variable signal source 912 or may increase or reduce the resonant frequency of the power transmission resonator 911 or the resonant frequency of the power reception resonator 921. After such adjustment, the control apparatus 900 may detect the plurality of specific frequencies again.

As described above, in the wireless power transmission system according to the ninth embodiment, the control apparatus, upon failing to correctly detect the plurality of specific frequencies, adjusts the set voltage, set current, or set power for the frequency-variable signal source, the resonant frequency of the power transmission resonator, or the resonant frequency of the power reception apparatus. Thus, the control apparatus allows prevention of a situation where a failure to detect the plurality of specific frequencies precludes estimation of the coupling coefficient, the resonant frequency of the power transmission resonator, and the resonant frequency of the power reception apparatus.

(Tenth Embodiment)

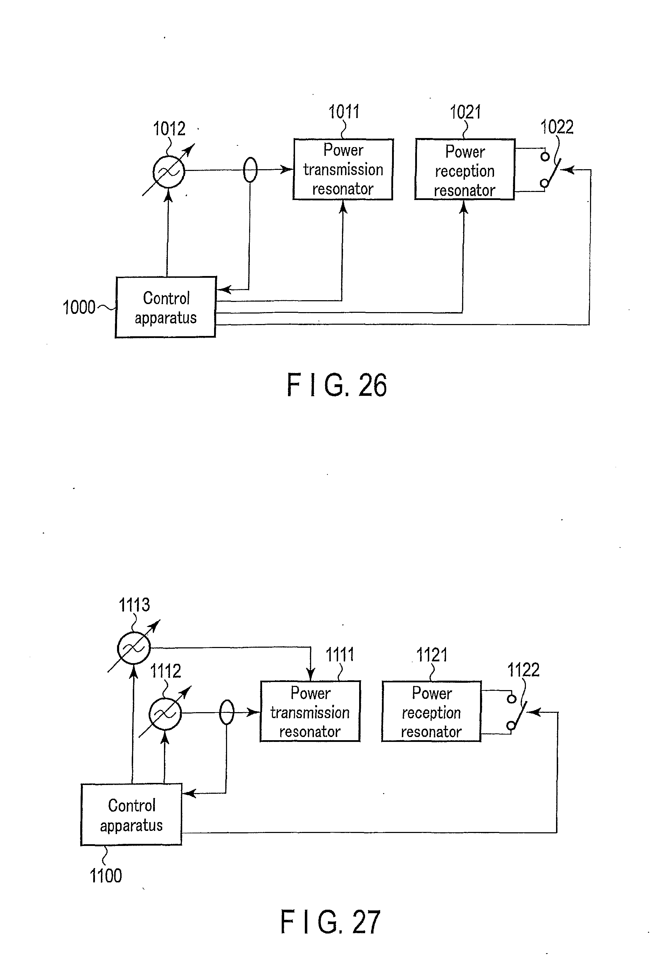

As illustrated in FIG. 26, a wireless power transmission system according to a tenth embodiment includes a control apparatus 1000, a power transmission resonator 1011, a frequency-variable signal source 1012, a power reception resonator 1021, and a variable impedance element 1022.

The frequency-variable signal source 1012 may be identical or similar to the above-described frequency-variable signal source 112, the above-described driving signal source 212 and inverter 213, or the above-described frequency-variable signal source 912. The variable impedance element 1022 may be identical or similar to the above-described variable impedance element 122. The control apparatus 1000 is different from the above-described control apparatus 100, control apparatus 200, control apparatus 300, control apparatus 400, control apparatus 500, control apparatus 600, control apparatus 700, control apparatus 800, or control apparatus 900 in some of the operations.

The power transmission resonator 1011 includes a first circuit corresponding to a resonant circuit portion used for wireless power transmission and a second circuit including at least one capacitor or inductor which can be connected in series or parallel with the first circuit. The connection state between the first circuit and the second circuit is determined by a control signal from the control apparatus 1000. The capacitance or inductance of the second circuit is known. For example, the capacitance or inductance of the second circuit may be pre-checked using an accurate measurement method. In particular, the capacitor is suitable for the second circuit because suppressing manufacturing variation of the capacitor is easier than suppressing manufacturing variation of the inductor.

Similarly, the power reception resonator 1021 includes a first circuit corresponding to a resonant circuit portion used for wireless power transmission and a second circuit which can be connected in series or parallel with the first circuit and which includes at least one capacitor or inductor. Whether the second circuit is connected to the first circuit is determined by a control signal from the control apparatus 1000. The capacitance or inductance of the second circuit is known.

The control apparatus 1000 provides a control signal for connecting the second circuit to the first circuit, to the power transmission resonator 1011 or to the power reception resonator 1021 as needed. Connection of the second circuit to the first circuit fluctuates the resonant frequency of the power transmission resonator 1011 or the resonant frequency of the power reception resonator 1021. The capacitance or inductance of the second circuit is known. Hence, the control apparatus 1000 can derive the resonant frequency before the fluctuation occurs based on an estimated value for the resonant frequency after the fluctuation occurs.

As described above, in the wireless power transmission system according to the tenth embodiment, the control apparatus temporarily connects a capacitor with a known capacitance or an inductor with a known inductance, as needed, to the resonant circuit portion of the power transmission resonator or power reception resonator which is used for wireless power transmission. Thus, even when the range over which the frequency of the input signal to the power transmission resonator is swept is narrow, the control apparatus can estimate the coupling coefficient, the resonant frequency of the power transmission resonator, and the resonant frequency of the power reception resonator. This enables, for example, simplification of the frequency-variable signal source and a reduction of the time needed to finish sweeping the frequency of the input signal to the power transmission resonator.

(Eleventh Embodiment)

As illustrated in FIG. 27, a wireless power transmission system according to an eleventh embodiment includes a control apparatus 1100, a power transmission resonator 1111, a frequency-variable signal source 1112, a signal source 1113, a power reception resonator 1121, and a variable impedance element 1122.

The power transmission resonator 1111 may be identical or similar to the above-described power transmission resonator 111, the above-described power transmission resonator 411, the above-described power transmission resonator 611 and driver 613, or the above-described power transmission resonator 1011. The frequency-variable signal source 1012 may be identical or similar to the above-described frequency-variable signal source 112, the above-described driving signal source 212 and inverter 213, or the above-described frequency-variable signal source 912.

The power reception resonator 1121 may be identical or similar to the above-described power reception resonator 121, the above-described power reception resonator 421, the above-described power reception resonator 621 and driver 623, or the above-described power reception resonator 1021. The variable impedance element 1122 may be identical or similar to the above-described variable impedance element 122. The control apparatus 1100 is different from the control apparatus 100, control apparatus 200, control apparatus 300, control apparatus 400, control apparatus 500, control apparatus 600, control apparatus 700, control apparatus 800, control apparatus 900, or control apparatus 1000 in some of the operations.

The signal source 1113 is a signal source for wireless power transmission. The signal source 1113 may include, for example, a driving signal source and an inverter.

As described above in the embodiments, the control apparatus 1100 estimates the coupling coefficient, the resonant frequency of the power transmission resonator 1111, and the resonant frequency of the power reception resonator 1121. It should be noted that the control apparatus 1100 provides the signal source 1113 with a control signal for stopping the operation of the signal source 1113 or a control signal for reducing the set voltage, set current, or set power for the signal source 1113, during the period when a plurality of specific frequencies are detected.

As described above, in the wireless power transmission system according to the eleventh embodiment, the control apparatus stops the operation of the signal source for wireless power transmission or reduces the set voltage, set current, or set power for the signal source during the period when the plurality of specific frequencies are detected. Thus, the control apparatus enables suppression of degradation of the detection accuracy for the plurality of specific frequencies which is caused by the adverse effect of the output voltage, output current, or output power from the signal source.

(Twelfth Embodiment)

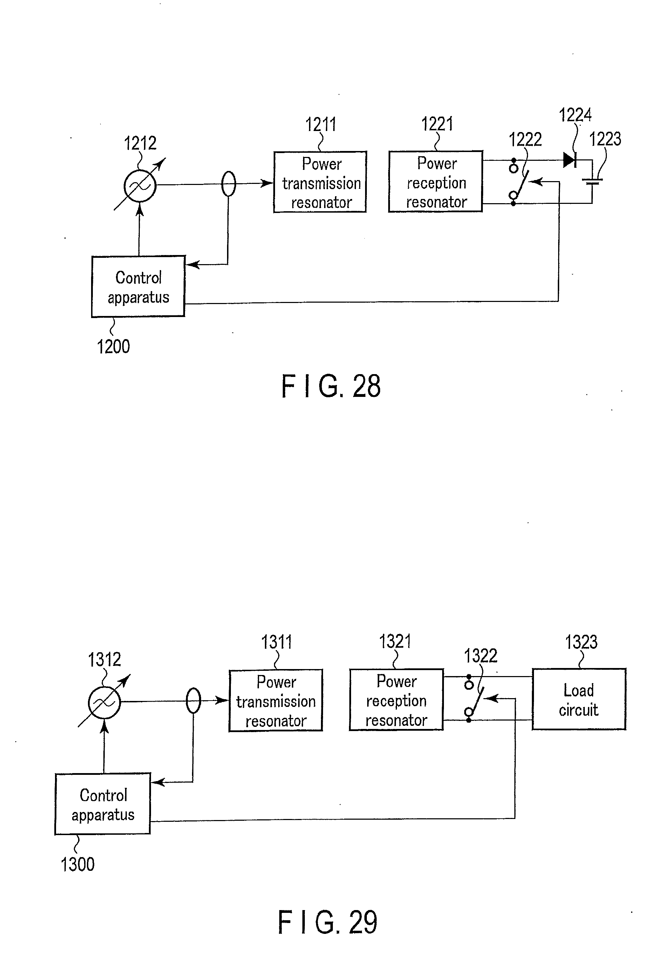

As illustrated in FIG. 28, a wireless power transmission system according to a twelfth embodiment includes a control apparatus 1200, a power transmission resonator 1211, a frequency-variable signal source 1212, a power reception resonator 1221, a variable impedance element 1222, a secondary battery 1223, and a backflow prevention circuit 1224.

The power transmission resonator 1211 may be identical or similar to the above-described power transmission resonator 111, the above-described power transmission resonator 411, the above-described power transmission resonator 611 and driver 613, or the above-described power transmission resonator 1011. The frequency-variable signal source 1212 may be identical or similar to the above-described frequency-variable signal source 112, the above-described driving signal source 212 and inverter 213, or the above-described frequency-variable signal source 912.

The power reception resonator 1221 may be identical or similar to the above-described power reception resonator 121, the above-described power reception resonator 421, the above-described power reception resonator 621 and driver 623, or the above-described power reception resonator 1021. The variable impedance element 1222 may be identical or similar to the above-described variable impedance element 122. The secondary battery 1223 may be identical or similar to the above-described secondary battery 823. The control apparatus 1200 may be identical or similar to the control apparatus 100, control apparatus 200, control apparatus 300, control apparatus 400, control apparatus 500, control apparatus 600, control apparatus 700, control apparatus 800, control apparatus 900, control apparatus 1000, or control apparatus 1100.

The backflow prevention circuit 1224 may be, for example, a rectifying device such as a diode. The backflow prevention circuit 1224 prevents backflow of a current from the secondary battery 1223. Specifically, without the backflow prevention circuit 1224, backflow of a current occurs in a direction from the secondary battery 1223 through the variable impedance element 1222 under the second impedance condition. The backflow prevention circuit 1224 enables such backflow of a current to be inhibited, allowing suppression of wasteful discharge from the secondary battery and heat generation resulting from the discharge. Furthermore, without the backflow prevention circuit 1224, a current may flow into the secondary battery under the first impedance condition, degrading the detection accuracy for the specific frequencies. When the voltage at an output end of the power reception resonator is lower than the voltage of the secondary battery, the backflow prevention circuit 1224 enables flow of a current into the secondary battery to be inhibited, allowing degradation of the detection accuracy for the specific frequencies to be suppressed.

As described above, the wireless power transmission system according to the twelfth embodiment is provided with the backflow prevention circuit between the variable impedance element and the secondary battery. Thus, in the wireless power transmission system, the backflow prevention circuit functions under the second impedance condition to enable suppression of wasteful discharge from the secondary battery and heat generation resulting from the discharge.

(Thirteenth Embodiment)

As illustrated in FIG. 29, a wireless power transmission system according to a thirteenth embodiment includes a control apparatus 1300, a power transmission resonator 1311, a frequency-variable signal source 1312, a power reception resonator 1321, a variable impedance element 1322, and a load circuit 1323.

The power transmission resonator 1311 may be identical or similar to the above-described power transmission resonator 111, the above-described power transmission resonator 411, the above-described power transmission resonator 611 and driver 613, or the above-described power transmission resonator 1011. The frequency-variable signal source 1312 may be identical or similar to the above-described frequency-variable signal source 112, the above-described driving signal source 212 and inverter 213, or the above-described frequency-variable signal source 912.

The power reception resonator 1321 may be identical or similar to the above-described power reception resonator 121, the above-described power reception resonator 421, the above-described power reception resonator 621 and driver 623, or the above-described power reception resonator 1021. The control apparatus 1300 maybe identical or similar to the control apparatus 100, control apparatus 200, control apparatus 300, control apparatus 400, control apparatus 500, control apparatus 600, control apparatus 700, control apparatus 800, control apparatus 900, control apparatus 1000, or control apparatus 1100.

The load circuit 1323 is connected to the power reception resonator 1321. The load circuit 1323 may be a secondary battery or a driving circuit for electronic equipment (not depicted in the drawings).

The variable impedance element 1322 is incorporated in the power reception apparatus and has functions identical or similar to the functions of the above-described variable impedance element 122. The variable impedance element 1322 further has an overvoltage protection function.

For example, when the distance between the power transmission resonator 1311 and the power reception resonator 1321 decreases rapidly, the impedance of the load circuit 1323 increases rapidly, or the output voltage of the signal source for wireless power transmission (for example, the frequency-variable signal source 1312) rises rapidly, an overvoltage may occur in the power reception apparatus, which may then break down. When a voltage exceeding a threshold is generated across the variable impedance element 1322, the variable impedance element 1322 reduces the impedance (for example, the same impedance as that obtained under the second impedance condition is provided) to protect the power reception apparatus from the overvoltage.

As described above, in the wireless power transmission system according to the thirteenth embodiment, the variable impedance element incorporated in the power reception apparatus further has the overvoltage protection function. Thus, the wireless power transmission system allows overvoltage protection for the power reception apparatus to be achieved in the wireless power transmission system according to each of the above-described embodiments while suppressing an increase in the number of components.

(Fourteenth Embodiment)

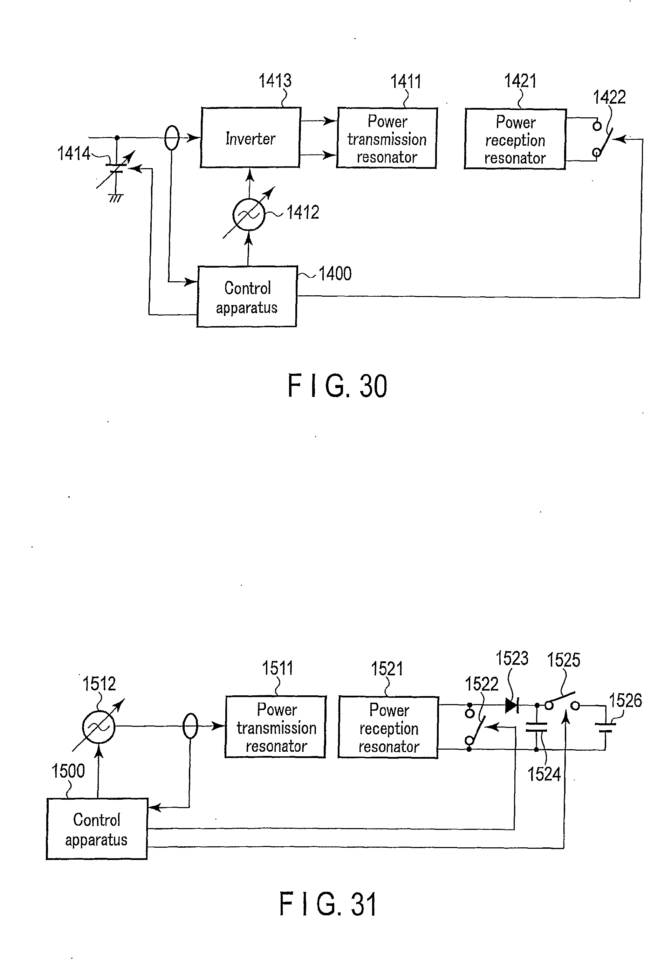

As illustrated in FIG. 30, a wireless power transmission system according to a fourteenth embodiment includes a control apparatus 1400, a power transmission resonator 1411, a driving signal source 1412, an inverter 1413, a variable voltage source 1414, an inverter 1413, a variable voltage source 1414, a power reception resonator 1421, and a variable impedance element 1422.

The power transmission resonator 1411 may be identical or similar to the above-described power transmission resonator 111, the above-described power transmission resonator 411, the above-described power transmission resonator 611 and driver 613, or the above-described power transmission resonator 1011. The driving signal source 1412 may be identical or similar to the above-described driving signal source 212. The inverter 1413 maybe identical or similar to the above-described inverter 213.

The power reception resonator 1421 may be identical or similar to the above-described power reception resonator 121, the above-described power reception resonator 421, the above-described power reception resonator 621 and driver 623, or the above-described power reception resonator 1021. The variable impedance element 1422 may be identical or similar to the above-described variable impedance element 122 or variable impedance element 1322. The control apparatus 1400 is different from the control apparatus 100, control apparatus 200, control apparatus 300, control apparatus 400, control apparatus 500, control apparatus 600, control apparatus 700, control apparatus 800, control apparatus 900, control apparatus 1000, or control apparatus 1100 in some of the operations.

The variable voltage source 1414 applies an output voltage to the inverter 1414. An output voltage from the variable voltage source 1414 corresponds to a set voltage for the inverter 1414. The output voltage from the variable voltage source 1414 is controlled by the control apparatus 1400.

As described above in the embodiments, the control apparatus 1400 estimates the coupling coefficient, the resonant frequency of the power transmission resonator 1411, and the resonant frequency of the power reception resonator 1421. The control apparatus 1400 provides the variable voltage source 1414 with a control signal for setting the output voltage from the variable voltage source 1414 to a value smaller than a normal value during the period for detection of a plurality of specific frequencies. On the other hand, the control apparatus 1400 provides the variable voltage source 1414 with a control signal for setting the output voltage from the variable voltage source 1414 to the normal value during a period for wireless power transmission.

As described above, depending on the resonator condition and the impedance condition, the input voltage, input current, input power to the power transmission resonator 1141 may have the maximal value instead of the minimal value at a plurality of specific frequencies. In such a case, the power transmission apparatus and the power reception apparatus consume high power, and heat is also generated in accordance with power consumption. Thus, the control apparatus 1400 sets the output voltage from the variable voltage source 1414 to a voltage lower than the normal value during the period for detection of a plurality of specific frequencies. This suppresses wasteful heat generation during the period. On the other hand, the control apparatus 1400 achieves a desired transmission power value by setting the output voltage from the variable voltage source 1414 to the normal value during the period for wireless power transmission.

As described above, in the wireless power transmission system according to the fourteenth embodiment, the control apparatus reduces the set voltage for the inverter below the normal value during the period when a plurality of specific frequencies are detected. Thus, the control apparatus reduces the power consumed by the power transmission apparatus and the power reception apparatus during the above-described period. This allows wasteful heat generation to be suppressed.

(Fifteenth Embodiment)

As illustrated in FIG. 31, a wireless power transmission system according to a fifteenth embodiment includes a control apparatus 1500, a power transmission resonator 1511, a frequency-variable signal source 1512, a power reception resonator 1521, a variable impedance element 1522, a rectifier circuit 1523, a smoothing capacitor 1524, a switch 1526, and a secondary battery 1526.

The power transmission resonator 1511 may be identical or similar to the above-described power transmission resonator 111, the above-described power transmission resonator 411, the above-described power transmission resonator 611 and driver 613, or the above-described power transmission resonator 1011. The frequency-variable signal source 1512 may be identical or similar to the above-described frequency-variable signal source 112, the above-described driving signal source 212 and inverter 213, or the above-described frequency-variable signal source 912.

The power reception resonator 1521 may be identical or similar to the above-described power reception resonator 121, the above-described power reception resonator 421, the above-described power reception resonator 621 and driver 623, or the above-described power reception resonator 1021. The variable impedance element 1522 may be identical or similar to the above-described variable impedance element 122 or variable impedance element 1322. The secondary battery 1526 may be identical or similar to the above-described secondary battery 823 or secondary battery 1223.

The control apparatus 1500 is different from the control apparatus 100, control apparatus 200, control apparatus 300, control apparatus 400, control apparatus 500, control apparatus 600, control apparatus 700, control apparatus 800, control apparatus 900, control apparatus 1000, control apparatus 1100, or control apparatus 1400 in some of the operations.

The rectifier circuit 1523 rectifies the output current from the power reception resonator 1521. The rectifier circuit 1523 may be a diode. The smoothing capacitor 1524 smooths an output voltage from the rectifier circuit 1523.

The switch 1525 is interposed between the secondary battery 1526 and the smoothing capacitor 1524 and is controllably turned on and off by the control apparatus 1500. In an ON state, the switch 1525 produces a short circuit between the secondary battery 1526 and the smoothing capacitor 1524. Hence, while the switch 1525 is in the ON state, the secondary battery 1526 is charged. On the other hand, in an OFF state, the switch 1525 produces an open circuit between the secondary battery 1526 and the smoothing capacitor 1524.

The smoothing capacitor 1524 may degrade the detection accuracy for the specific frequencies under the first impedance condition. Specifically, when the frequency of the input signal to the power transmission resonator 1511 is swept under the first impedance condition, the output current from the power reception resonator 1521 flows to the smoothing capacitor 1524 via the rectifier circuit 1523. That is, the load impedance decreases below an impedance provided by the variable impedance element 1522 under the first condition, making correct detection of the specific frequencies difficult.

Before giving a command to sweep the frequency of the input signal to the power transmission resonator 1511, the control apparatus 1500 sets the switch 1525 to the OFF state. In this case, the control apparatus 1500 preferably sets the impedance of the variable impedance element 1522 to a large value. For example, the control apparatus 1500 sets the first impedance condition. This operation allows the rectifier circuit 1523 to rectify the output current from the power reception resonator 1521 to charge the smoothing capacitor 1524. Once the smoothing capacitor 1524 is fully charged, the control apparatus 1500 gives a command to sweep the signal frequency of the input signal to the power transmission resonator 1511 as described above in the embodiments.

Specifically, the smoothing capacitor 1524 is charged such that the output side potential of the rectifier circuit 1523 is higher than the input side potential of the rectifier circuit 1523 while the frequency of the input signal to the power transmission resonator 1511 is swept under the first impedance condition. When the output side potential of the rectifier circuit 1523 is higher than the input side potential of the rectifier circuit 1523, the output current from the power reception resonator 1521 does not flow beyond the rectifier circuit 1523 to the smoothing capacitor 1524 while the frequency of the input signal to the power transmission resonator 1511 is swept under the first impedance condition. This serves to avoid reducing the load impedance. That is, the control apparatus 1500 can detect the specific frequencies even under the first impedance condition.

As described above, in the wireless power transmission system according to the fifteenth embodiment, the control apparatus precharges the smoothing capacitor connected to the secondary battery before the frequency of the input signal to the power transmission resonator is swept under the first impedance condition. Thus, the control apparatus prevents the output current from the power reception resonator from flowing out beyond the rectifier circuit during the period when the frequency of the input signal to the power transmission resonator is swept under the first impedance condition. This enables the specific frequencies to be correctly detected.

(Sixteenth Embodiment)

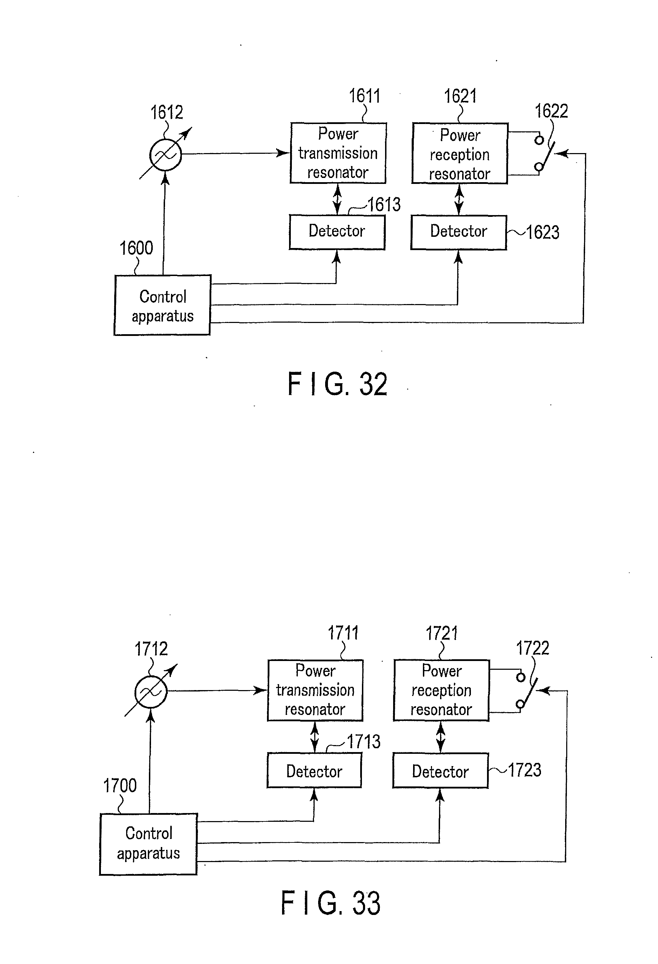

As illustrated in FIG. 32, a wireless power transmission system according to a sixteenth embodiment includes a control apparatus 1600, a power transmission resonator 1611, a frequency-variable signal source 1612, a detector 1613, a power reception resonator 1621, a variable impedance element 1622, and a detector 1623.

The power transmission resonator 1611 may be identical or similar to the above-described power transmission resonator 111, the above-described power transmission resonator 411, the above-described power transmission resonator 611 and driver 613, or the above-described power transmission resonator 1011. The frequency-variable signal source 1612 may be identical or similar to the above-described frequency-variable signal source 112, the above-described driving signal source 212 and inverter 213, or the above-described frequency-variable signal source 912.

The power reception resonator 1621 may be identical or similar to the above-described power reception resonator 121, the above-described power reception resonator 421, the above-described power reception resonator 621 and driver 623, or the above-described power reception resonator 1021. The variable impedance element 1622 may be identical or similar to the above-described variable impedance element 122 or variable impedance element 1322.

The control apparatus 1600 is different from the control apparatus 100, control apparatus 200, control apparatus 300, control apparatus 400, control apparatus 500, control apparatus 600, control apparatus 700, control apparatus 800, control apparatus 900, control apparatus 1000, control apparatus 1100, control apparatus 1400, or control apparatus 1500 in some of the operations.

Before wireless power transmission is started, the control apparatus 1600 estimates the coupling coefficient, the resonant frequency of the power transmission resonator 1611, and the resonant frequency of the power reception resonator 1621 as described above in the embodiments. The control apparatus 1600 gives a command for operation to the detector 1613 or the detector 1623, for example, when at least one of the coupling coefficient, the resonant frequency of the power transmission resonator 1611, and the resonant frequency of the power reception resonator 1621 deviates from the allowable range thereof.

The detector 1613 is incorporated in the power transmission apparatus. The detector 1613 may be installed in the power transmission resonator 1611 or provided independently of the power transmission resonator 1611. Upon receiving an operation command from the control apparatus 1600, the detector 1613 detects information on a usage environment for the power transmission resonator 1611. Specifically, the detector 1613 measures the positional relation (for example, the distance) of the power reception resonator 1621 relative to the power transmission resonator 1611, and searches for an obstacle near the power transmission resonator 1611. The relative positional relation of the power reception resonator 1621 can be measured using, for example, a range finding sensor. The obstacle near the power transmission resonator 1611 can be detected using, for example, an image sensor.

The detector 1623 is incorporated in the power reception apparatus. The detector 1623 may be installed in the power reception resonator 1621 or provided independently of the power reception resonator 1621. Upon receiving an operation command from the control apparatus 1600, the detector 1623 detects information on a usage environment for the power reception resonator 1621. Specifically, the detector 1623 measures the positional relation (for example, the distance) of the power transmission resonator 1611 relative to the power reception resonator 1621, and searches for an obstacle near the power reception resonator 1621. The relative positional relation of the power transmission resonator 1611 can be measured using, for example, a range finding sensor. The obstacle near the power reception resonator 1621 can be detected using, for example, an image sensor.

As described above, in the wireless power transmission system according to the sixteenth embodiment, the control apparatus gives a command to detect information on the usage environment for the power transmission resonator or the power reception resonator to check for a sign of abnormality in future wireless power transmission when estimated values for the coupling coefficient, the resonant frequency of the power transmission resonator, and the resonant frequency of the power reception resonator deviate from the respective allowable ranges. Thus, the control apparatus enables prevention of, for example, a possible overcurrent or overvoltage caused by the abnormal positional relation between the power transmission resonator and the power reception resonator and an accident caused by overheating of an obstacle present near the power transmission resonator or the power reception resonator.

(Seventeenth Embodiment)

As illustrated in FIG. 33, a wireless power transmission system according to a seventeenth embodiment includes a control apparatus 1700, a power transmission resonator 1711, a frequency-variable signal source 1712, a detector 1713, a power reception resonator 1721, a variable impedance element 1722, and a detector 1723.

The power transmission resonator 1711 may be identical or similar to the above-described power transmission resonator 111, the above-described power transmission resonator 411, the above-described power transmission resonator 611 and driver 613, or the above-described power transmission resonator 1011. The frequency-variable signal source 1712 may be identical or similar to the above-described frequency-variable signal source 112, the above-described driving signal source 212 and inverter 213, or the above-described frequency-variable signal source 912. The detector 1713 may be identical or similar to the above-described detector 1613.

The power reception resonator 1721 may be identical or similar to the above-described power reception resonator 121, the above-described power reception resonator 421, the above-described power reception resonator 621 and driver 623, or the above-described power reception resonator 1021. The variable impedance element 1722 may be identical or similar to the above-described variable impedance element 122 or variable impedance element 1322. The detector 1723 may be identical or similar to the above-described detector 1623.

The control apparatus 1700 detects a plurality of specific frequencies before wireless power transmission is started, as described above in the embodiments. The control apparatus 1700 calculates a Q factor indicative of the sharpness of the frequency characteristic for at least one of the plurality of specific frequencies. The Q factor can be calculated based on the absolute value of the input voltage, input current, or input power to the power transmission resonator 1711 at the target specific frequency and absolute values of the input voltage, input current, or input power to the power transmission resonator 1711 near the target specific frequency. The control apparatus 1700 gives an operation command to the detector 1713 or the detector 1723 when the Q factor deviates from the allowable range thereof.

As described above, in the wireless power transmission system according to the seventeenth embodiment, the control apparatus gives a command to detect information on the usage environment for the power transmission resonator or the power reception resonator to check for a sign of abnormality in future wireless power transmission when the Q factor deviates from the allowable range thereof. Thus, the control apparatus enables prevention of, for example, a possible overcurrent or overvoltage caused by the abnormal positional relation between the power transmission resonator and the power reception resonator and an accident caused by overheating of an obstacle present near the power transmission resonator or the power reception resonator.

A part of the processing in the above-described embodiments can be implemented using a general-purpose computer as basic hardware. A program implementing the processing in each of the above-described embodiments may be stored in a computer readable storage medium for provision. The program is stored in the storage medium as a file in an installable or executable format. The storage medium is a magnetic disk, an optical disc (CD-ROM, CD-R, DVD, or the like), a magnetooptic disc (MO or the like), a semiconductor memory, or the like. That is, the storage medium may be in any format provided that a program can be stored in the storage medium and that a computer can read the program from the storage medium. Furthermore, the program implementing the processing in each of the above-described embodiments may be stored on a computer (server) connected to a network such as the Internet so as to be downloaded into a computer (client) via the network.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

Reference Signs List

100, 200, 300, 400, 500, 600, 700, 800, 900, 1000, 1100, 1200, 1300, 1400, 1500, 1600, 1700: Control Apparatus

101: Controller
102: Estimator
111, 211, 311, 411, 511, 611, 711, 811, 911, 1011, 1111, 1211, 1311, 1411, 1511, 1611, 1711: Power Transmission Resonator
112, 312, 412, 512, 612, 712, 812, 912, 1012, 1112, 1212, 1312, 1512, 1612, 1712: Frequency-Variable Signal Source
121, 321, 421, 521, 621, 721, 821, 921, 1021, 1121, 1221, 1321, 1421, 1521, 1621, 1721: Power Reception Resonator
122, 222, 322, 422, 522, 622, 722, 822, 922, 1022, 1122, 1222, 1322, 1422, 1522, 1622, 1722: Variable Impedance Element 212, 1412: Driving Signal Source
213, 1413: Inverter
331, 332: Wireless Communicator
531, 631: Transmission Possibility Determiner
613, 623: Driver
731: Transmission Power Calculator
823, 1223, 1526: Secondary Battery
831: Charging Time Calculator
1112: Signal Source
1224: Backflow Prevention Circuit
1323: Load Circuit
1414: Variable Voltage Source
1523: Rectifier Circuit
1524: Smoothing Capacitor
1525: Switch
1613, 1623, 1713, 1723: Detector

**Claims**

1. A control apparatus comprising:

   a controller that sets a first resonator condition under which a variable impedance element connected to a first resonator has a first impedance, commands a frequency-variable signal source to perform a first frequency sweep on an input signal to a second resonator coupling with the first resonator under the first impedance condition, sets a second impedance condition under which the variable impedance element has a second impedance different from the first impedance, and commands the frequency-variable signal source to perform a second frequency sweep on the input signal under the second impedance condition, the frequency-variable signal source generating the input signal; and
   an estimator that detects at least one first specific frequency that provides the input signal with a maximal value or a minimal value during a period when the first frequency sweep is performed, detects at least one second specific frequency that provides the input signal with a maximal value or a minimal value during a period when the second frequency sweep is performed, and estimates, based on the first specific frequency and the second specific frequency, at least one of a coupling coefficient for coupling between the first resonator and the second resonator, a first resonant frequency of the first resonator, and a second resonant frequency of the second resonator.

2. The apparatus according to claim 1, wherein the estimator estimates at least one of the coupling coefficient, the first resonant frequency, and the second resonant frequency by applying a reference table or a transformation to the first specific frequency and the second specific frequency.

3. The apparatus according to claim 1, wherein the variable impedance element is a switch element, and is in an OFF state under the first impedance condition and is in an ON state under the second impedance condition.

4. The apparatus according to claim 1, wherein the frequency-variable signal source includes a driving signal source and an inverter,
   the driving signal source generates a switching signal for driving the inverter,
   the controller commands the driving signal source to perform the first frequency sweep on the switching signal under the first impedance condition and commands the driving signal source to perform the second frequency sweep on the switching signal under the second impedance condition, and
   the estimator detects the at least one first specific frequency indicating a maximal value or a minimal value of the input signal to or an output signal from the inverter during the period when the first frequency sweep is performed, and detects the at least one second specific frequency indicating a maximal value or a minimal value of the input signal to or the output signal from the inverter during the period when the second frequency sweep is performed.

5. The apparatus according to claim 1, further comprising a wireless communicator that performs wireless communication, and
the controller sets the first impedance condition and the second impedance condition via the wireless communicator.

6. The apparatus according to claim 1, further comprising a wireless communicator that performs wireless communication,
the controller commands the frequency-variable signal source to perform the first frequency sweep and the second frequency sweep via the wireless communicator, and
the estimator detects the at least one first specific frequency and the at least one second specific frequency via the wireless communicator.

7. The apparatus according to claim 1, wherein at least one of the first resonant frequency and the second resonant frequency is variable, and
the controller adjusts at least one of the first resonant frequency and the second resonant frequency based on an estimated value for at least one of the coupling coefficient, the first resonant frequency, and the second resonant frequency.

8. The apparatus according to claim 1, wherein the estimator provides an estimated value for at least one of the coupling coefficient, the first resonant frequency, and the second resonant frequency to a determiner that determines whether or not future wireless power transmission is normally enabled based on the estimated value.

9. The apparatus according to claim 1, wherein at least one of the first resonator and the second resonator includes a mechanical moving mechanism driven by a driver;
the estimator provides an estimated value for at least one of the coupling coefficient, the first resonant frequency, and the second resonant frequency to a determiner that determines whether or not future wireless power transmission is normally enabled based on the estimated value, and
the driver drives the moving mechanism when the determiner determines that the wireless power transmission is not enabled.

10. The apparatus according to claim 1, wherein the estimator provides an estimated value for at least one of the coupling coefficient, the first resonant frequency, and the second resonant frequency to a calculator that calculates a predictive value for transmission power in future wireless power transmission based on the estimated value.

11. The apparatus according to claim 1, wherein the estimator provides an estimated value for at least one of the coupling coefficient, the first resonant frequency, and the second resonant frequency to a calculator that calculates a predictive value for a charging time for a secondary battery through future wireless power transmission based on the estimated value.

12. The apparatus according to claim 1, wherein the controller adjusts a set voltage, a set current, or a set power for the frequency-variable signal source when at least one of the first specific frequency and the second specific frequency is not correctly detected.

13. The apparatus according to claim 1, wherein at least one of the first resonant frequency and the second resonant frequency is variable, and
the controller adjusts at least one of the first resonant frequency and the second resonant frequency when at least one of the first specific frequency and the second specific frequency is not correctly detected.

14. The apparatus according to claim 1, wherein at least one of the first resonator and the second resonator includes a first circuit corresponding to a resonant circuit portion used for wireless power transmission and a second circuit including at least one of a capacitor with a known capacitance and an inductor with a known inductance which is allowed to connect in series or parallel with the first circuit and,
the controller controls a connection state between the first circuit and the second circuit, and
when the first circuit is connected to the second circuit, the estimator estimates an estimated value for at least one of the coupling coefficient, the first resonant frequency, and the second resonant frequency when the second circuit is not connected, further based on at least one of the known capacitance and the known inductance.

15. The apparatus according to claim 1, wherein the controller reduces one of a set voltage, a set current, and a set power for a signal source for wireless power transmission during the period when the first frequency sweep is performed and the period when the second frequency sweep is performed.

16. The apparatus according to claim 1, wherein the first resonator is connected to a secondary battery and to a backflow prevention circuit that prevents backflow from the secondary battery to the variable impedance element.

17. The apparatus according to claim 1, wherein the variable impedance element reduces an impedance thereof when a voltage exceeding a threshold is generated across the variable impedance element.

18. The apparatus according to claim 1, wherein the frequency-variable signal source is also used as a signal source for wireless power transmission, and
the controller reduces a set voltage, a set current, and a set power for the frequency-variable signal source during the period when the first frequency sweep is performed and during the period when the second frequency sweep is performed than during the period when the wireless power transmission is performed.

19. The apparatus according to claim 1, wherein the first resonator is connected to a rectifier circuit that rectifies an output current from the first resonator, to a smoothing capacitor that smooths an output voltage from the rectifier circuit, to a switch interposed between the smoothing capacitor and a secondary battery, and to the secondary battery, and
the controller sets the switch to an ON state, sets the switch to an OFF state after the smoothing capacitor is charged, and gives a command to perform the first frequency sweep after the switch is set to the OFF state.

20. The apparatus according to claim 1, wherein the controller provides an operation command to a detector that detects information on a usage environment for at least one of the first resonator and the second resonator when an estimated value for at least one of the coupling coefficient, the first resonant frequency, and the second resonant frequency deviates from an allowable range thereof.

21. The apparatus according to claim 1, wherein the controller provides an operation command to a detector that detects information on a usage environment for at least one of the first resonator and the second resonator when a Q factor calculated based on at least one of the first specific frequency and the second specific frequency deviates from an allowable range thereof.

22. A power transmission apparatus comprising the control apparatus according to claim 1.

23. The power transmission apparatus according to claim 22, further comprising the second resonator and the frequency-variable signal source.

24. The power transmission apparatus according to claim 22, further comprising the first resonator and the variable impedance element.

25. A power reception apparatus comprising the control apparatus according to claim 1.

26. The power reception apparatus according to claim 25, further comprising the first resonator and the variable impedance element.

27. The power reception apparatus according to claim 25, further comprising the second resonator and the frequency-variable signal source.

28. A control method comprising:

setting a first resonator condition under which a variable impedance element connected to a first resonator has a first impedance;
commanding a frequency-variable signal source to perform a first frequency sweep on an input signal to a second resonator coupling with the first resonator under the first impedance condition, the frequency-variable signal source generating the input signal;

setting a second impedance condition under which the variable impedance element has a second impedance different from the first impedance;

commanding the frequency-variable signal source to perform a second frequency sweep on the input signal under the second impedance condition;

detecting at least one first specific frequency that provides the input signal with a maximal value or a minimal value during a period when the first frequency sweep is performed;

detecting at least one second specific frequency that provides the input signal with a maximal value or a minimal value during a period when the second frequency sweep is performed; and

estimating, based on the first specific frequency and the second specific frequency, at least one of a coupling coefficient for coupling between the first resonator and the second resonator, a first resonant frequency of the first resonator, and a second resonant frequency of the second resonator.

F I G. 1

F I G. 2

F I G. 3

F I G. 4

F I G. 5

F I G. 6

F I G. 7

F I G. 8

F I G. 9

F I G. 10

F I G. 11

F I G. 12

F I G. 13

F I G. 14

F I G. 15

FIG. 16

FIG. 17

DC input

}AC output

# F I G. 18

312

311
Power
transmission
resonator

321
Power
reception
resonator

322

300
Control
apparatus

331
Wireless
communicator

332
Wireless
communicator

# F I G. 19

F I G. 20

F I G. 21

F I G. 22

F I G. 23

FIG. 24

FIG. 25

F I G. 26

F I G. 27

1212

1211
Power
transmission
resonator

1221
Power
reception
resonator

1222 1224 1223

Control
apparatus

1200

# F I G. 28

1312

1311
Power
transmission
resonator

1321
Power
reception
resonator

1322

1323
Load
circuit

Control
apparatus

1300

# F I G. 29

F I G. 30

F I G. 31

F I G. 32

F I G. 33

F I G. 34

## INTERNATIONAL SEARCH REPORT

| International application No. |
| --- |
| PCT/JP2012/075838 |

**A. CLASSIFICATION OF SUBJECT MATTER**
*H02J17/00*(2006.01)i, *H03H7/40*(2006.01)i

According to International Patent Classification (IPC) or to both national classification and IPC

**B. FIELDS SEARCHED**

Minimum documentation searched (classification system followed by classification symbols)
H02J17/00, H03H7/40

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2012-170271 A (Toko, Inc.), 06 September 2012 (06.09.2012), paragraph [0039]; all drawings (Family: none) | 1-28 |
| A | JP 2012-23949 A (Semiconductor Energy Laboratory Co., Ltd.), 02 February 2012 (02.02.2012), entire text; all drawings & KR 2011-137747 A | 1-28 |
| A | JP 2011-45161 A (Nagano Japan Radio Co., Ltd.), 03 March 2011 (03.03.2011), entire text; all drawings (Family: none) | 1-28 |

☒ Further documents are listed in the continuation of Box C. ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>19 November, 2012 (19.11.12) | Date of mailing of the international search report<br>27 November, 2012 (27.11.12) |
| --- | --- |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2012/075838

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2011-125184 A  (Toyota Motor Corp.), 23 June 2011 (23.06.2011), entire text; all drawings (Family: none) | 1-28 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2011199975 PCT